(19) Europäisches Patentamt
European Patent Office
Office européen des brevets

(11) **EP 3 422 650 B1**

(12) **EUROPEAN PATENT SPECIFICATION**

(45) Date of publication and mention
of the grant of the patent:
**11.08.2021 Bulletin 2021/32**

(51) Int Cl.:
*H04L 27/26* (2006.01)    *H04J 99/00* (2009.01)
*H04L 25/06* (2006.01)

(21) Application number: **16891633.6**

(22) Date of filing: **29.11.2016**

(86) International application number:
**PCT/JP2016/085292**

(87) International publication number:
**WO 2017/145477 (31.08.2017 Gazette 2017/35)**

(54) **DEVICE AND METHOD**

VORRICHTUNG UND VERFAHREN

DISPOSITIF ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2016 JP 2016031394**

(43) Date of publication of application:
**02.01.2019 Bulletin 2019/01**

(73) Proprietor: **Sony Group Corporation**
**Tokyo 108-0075 (JP)**

(72) Inventor: **YOSHIZAWA, Atsushi**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**JP-A- 2014 526 201    JP-A- 2016 500 964**
**US-B2- 9 973 364**

• **ERICSSON: "NB-IoT - Base station complexity", 3GPP DRAFT; R1-157395 NB-IOT - BASESTATION COMPLEXIY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, US; 20151115 - 20151122 15 November 2015 (2015-11-15), XP051040094, Retrieved from the Internet: URL:http://www.3gpp.org/ftp/Meetings_3GPP_ SYNC/RAN1/Docs/ [retrieved on 2015-11-15]**
• **IVAN GASPAR et al.: "Frequency-Shift Offset-QAM for GFDM", IEEE Communications Letters, vol. 19, no. 8, 15 June 2015 (2015-06-15), pages 1454-1457, XP055533526,**
• **IVAN GASPAR et al.: "Synchronization using a Pseudo-Circular Preamble for Generalized Frequency Division Multiplexing in Vehicular Communication", Vehicular Technology Conference(VTC Fall, 9 September 2015 (2015-09-09), XP055533532,**

**Description**

Technical Field

The present disclosure relates to an apparatus and a method.

Background Art

In recent years, as a representative of multicarrier modulation techniques (that is, multiplexing techniques or multiple access technologies), orthogonal frequency division multiplexing (OFDM) and orthogonal frequency division multiple access (OFDMA) have been put to practical use in various wireless systems. Application examples include digital broadcasting, a wireless LAN, and a cellular system. OFDM has resistance with respect to a multipath propagation path and can prevent the occurrence of inter-symbol interference caused by a multipath delay wave by employing a cyclic prefix (CP). On the other hand, OFDM has a disadvantage in that a level of out-of-band radiation is large. Further, a peak-to-average power ratio (PAPR) tends to increase, and there is also a disadvantage in which it is vulnerable to distortion occurring in transmission and reception apparatuses.

New modulation techniques capable of suppressing such out-of-band radiation which is a disadvantage of OFDM are emerging. These modulation techniques introduce a new concept called a subsymbol and can design a time and a frequency of a symbol flexibly by dividing one symbol into an arbitrary number of subsymbols. Further, these modulation techniques can reduce unnecessary out-of-band signal radiation by applying a pulse shaping filter to a symbol and performing waveform shaping, and the frequency use efficiency is expected to be improved. Further, the present modulation technology makes it possible to more flexibly set a resource by introducing a subsymbol, and thus serves as a means for expressing diversity that is going to be desired in the future.

These modulation techniques have various names such as universal filtered-OFDM (UF-OFDM), universal filtered multi-carrier (UFMC), filter bank multi-carrier (FBMC), and generalized OFDM (GOFDM). Particularly, since these modulation techniques can be regarded as generalized OFDM, they are also referred to as generalized frequency division multiplexing (GFDM), and this name is employed in this specification. A basic technology related to GFDM is disclosed, for example, in Patent Literature 1 and Non-Patent Literature 1.

Citation List

Patent Literature

Patent Literature 1: US Patent Publication No. 2010/0189132A1

Non-Patent Literature

Non-Patent Literature 1: N. Michailow, et al., "Generalized Frequency Division Multiplexing for 5th Generation Cellular Networks," IEEE Trans. Commun., Vol. 62, no. 9, Sept. 2014.
Further prior art can be found in ERICSSON, "NB-IoT - Base station complexity", vol. RAN WG1, no. Anaheim, US; 20151115 - 20151122, (20151115), 3GPP DRAFT; R1-157395 NB-IOT - BASESTATION COMPLEXIY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, (20151115), XP051040094.

Disclosure of Invention

Technical Problem

In OFDM, some of the frequency bands of carriers that can cause the signal quality to degrade are not allowed to be used for preventing the reception success probability from decreasing. In GFDM, some of the frequency bands of carriers are not supposed to be used similarly. Here, in GFDM, subcarriers sometimes have greater bandwidth as compared with OFDM. In that case, a decrease in frequency use efficiency caused by refraining from using some of the frequency bands has great influence. It is then desirable to provide a mechanism that can improve frequency use efficiency while refraining from using some of the frequency bands of carriers in GFDM.

Solution to Problem

According to the present disclosure, there are provided apparatuses and methods as defined in the claims.

Advantageous Effects of Invention

According to the present disclosure as described above, there is provided a mechanism that can improve frequency use efficiency while refraining from using some of the frequency bands of carriers in GFDM. Note that the effects described above are not necessarily limitative. With or in the place of the above effects, there may be achieved any one of the effects described in this specification or other effects that may be grasped from this specification.

Brief Description of Drawings

[FIG. 1] FIG. 1 is an explanatory diagram for describing a technique related to GFDM.
[FIG. 2] FIG. 2 is an explanatory diagram for describing a technique related to GFDM.
[FIG. 3] FIG. 3 is an explanatory diagram for describing a technique related to GFDM.
[FIG. 4] FIG. 4 is a diagram for describing a typical transmission carrier generation process in LTE.
[FIG. 5] FIG. 5 is a diagram for describing a carrier leak that can happen to an OFDM carrier.
[FIG. 6] FIG. 6 is a diagram for describing an example of a spectrum of an OFDM carrier.
[FIG. 7] FIG. 7 is a diagram illustrating an example of a configuration of input data for generating an OFDM modulated wave.
[FIG. 8] FIG. 8 is a diagram illustrating an example of a configuration of input data for generating a GFDM modulated wave.
[FIG. 9] FIG. 9 is a diagram for describing an example of a spectrum of a GFDM carrier.
[FIG. 10] FIG. 10 is an explanatory diagram illustrating an example of a schematic configuration of a system according to the present embodiment.
[FIG. 11] FIG. 11 is a block diagram illustrating an example of a configuration of a base station according to the present embodiment.
[FIG. 12] FIG. 12 is a block diagram illustrating an example of a configuration of a terminal apparatus according to the present embodiment.
[FIG. 13] FIG. 13 is a diagram for describing an example of a spectrum of a GFDM carrier according to the present embodiment.
[FIG. 14] FIG. 14 is a diagram schematically illustrating a multiplexed resource according to the present embodiment.
[FIG. 15] FIG. 15 is a diagram for describing an example of a GFDM modulation process that entails resource multiplexing and is performed by the base station according to the present embodiment.
[FIG. 16] FIG. 16 is a diagram illustrating an example of an internal configuration of a resource generator of the base station according to the present embodiment.
[FIG. 17] FIG. 17 is a diagram illustrating an example of a GFDM modulation process that entails resource multiplexing and is performed by the base station according to the present embodiment.
[FIG. 18] FIG. 18 is a diagram for describing an example of a configuration of first input data corresponding to a first resource according to the present embodiment.
[FIG. 19] FIG. 19 is a diagram for describing an example of a configuration of second input data corresponding to a second resource according to the present embodiment.
[FIG. 20] FIG. 20 is a diagram for describing an example of a spectrum of a GFDM carrier corresponding to the first resource according to the present embodiment.
[FIG. 21] FIG. 21 is a diagram for describing an example of the configuration of the first input data corresponding to the first resource according to the present embodiment.
[FIG. 22] FIG. 22 is a diagram for describing an example of the spectrum of the GFDM carrier according to the present embodiment.
[FIG. 23] FIG. 23 is a diagram for describing an example of the configuration of the second input data corresponding to the second resource according to the present embodiment.
[FIG. 24] FIG. 24 is a diagram for describing an example of a successive GFDM demodulation process by the terminal apparatus according to the present embodiment.
[FIG. 25] FIG. 25 is a diagram for describing an example of signal processing related to transmission of GFDM signals according to MIMO by the base station according to the present embodiment.
[FIG. 26] FIG. 26 is a diagram for describing an example of the signal processing related to the transmission of the GFDM signals according to MIMO by the base station according to the present embodiment.

[FIG. 27] FIG. 27 is a diagram for describing an example of signal processing related to reception of GFDM signals according to MIMO by the terminal apparatus according to the present embodiment.

[FIG. 28] FIG. 28 is a flowchart illustrating an example of a flow of a transmission process executed in the base station according to the present embodiment.

[FIG. 29] FIG. 29 is a flowchart illustrating an example of a flow of a reception process executed in a terminal apparatus according to the present embodiment.

[FIG. 30] FIG. 30 is a block diagram illustrating a first example of a schematic configuration of an eNB.

[FIG. 31] FIG. 31 is a block diagram illustrating a second example of a schematic configuration of an eNB.

[FIG. 32] FIG. 32 is a block diagram illustrating an example of a schematic configuration of a smartphone.

[FIG. 33] FIG. 33 is a block diagram illustrating an example of a schematic configuration of a car navigation apparatus.

Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, in this specification and the drawings, there are cases in which elements having substantially the same functional configuration are distinguished by adding different letters after the same reference numeral. For example, a plurality of elements having substantially the same functional configuration are distinguished as terminal apparatuses 200A, 200B, and 200C as necessary. However, when it is not necessary to particularly distinguish a plurality of elements having substantially the same functional configuration, only the same reference numeral is attached. For example, when it is not necessary to particularly distinguish terminal apparatuses 200A, 200B and 200C, they are referred to simply as a "terminal apparatus 200."

Note that the description will proceed in the following order.

1. Introduction

    1.1. GFDM
    1.2. DC subcarrier
    1.3. Technical problem

2. Schematic configuration of system
3. Configurations of each apparatus

    3.1. Configuration of base station
    3.2. Configuration of terminal apparatus

4. Technical features

    4.1. GFDM modulation/demodulation
    4.2. Use of bandwidth of unused subcarrier
    4.3. Setting information
    4.4. Successive demodulation
    4.5. Signal processing
    4.6. Processing flow

5. Application examples
6. Conclusion

<<1. Introduction>>

<1.1. GFDM>

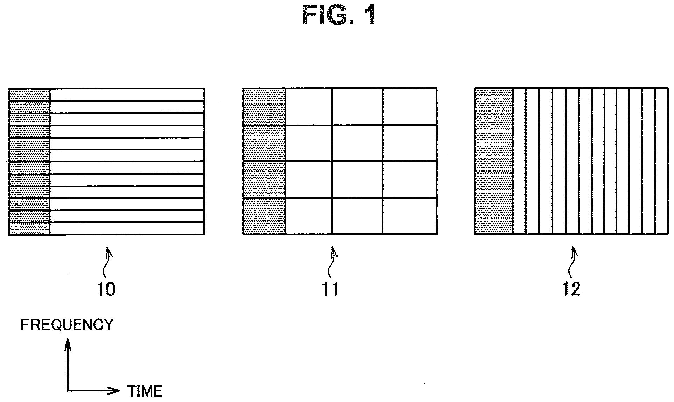

First, GFDM will be described with reference to FIGS. 1 to 3.

FIG. 1 is an explanatory diagram for describing a concept of a symbol in GFDM. A reference numeral 10 indicates resources (which are also referred to as radio resources. Note that the radio resources correspond to a unit resource) per symbol in OFDM. In the resources indicated by the reference numeral 10, one symbol interval is occupied by a single symbol, and a plurality of subcarriers are included in a frequency direction. Further, in OFDM, a CP is added to each symbol. A reference numeral 12 indicates resources of an interval corresponding to one symbol of OFDM in a single carrier frequency division multiplexing (SC-FDM) signal. The resources indicated by the reference numeral 12 are exclusively used by a single symbol over a carrier frequency, have a smaller symbol length than that in OFDM, and include a plurality of symbols in a time direction. A reference numeral 11 indicates resources of an interval corresponding to one symbol of OFDM in GFDM. The resources indicated by the reference numeral 11 have an intermediate structure between the resources indicated by the reference numeral 10 and the resources indicated by the reference numeral 12. In other words, in GFDM, an interval corresponding to one symbol of OFDM is divided into an arbitrary number of subsymbols, and the number of subcarriers is smaller than that of OFDM accordingly. The structure of such resources makes it possible to change the symbol length in accordance with a parameter and to provide a more flexible transmission format. Note that, in GFDM, it is desirable that the value of the product of the number of subcarriers and the number of subsymbols in a unit resource be a predetermined value. Note that the following also refers to the number of subcarriers in a unit resource simply as the number of subcarriers. The same applies to the number of subsymbols.

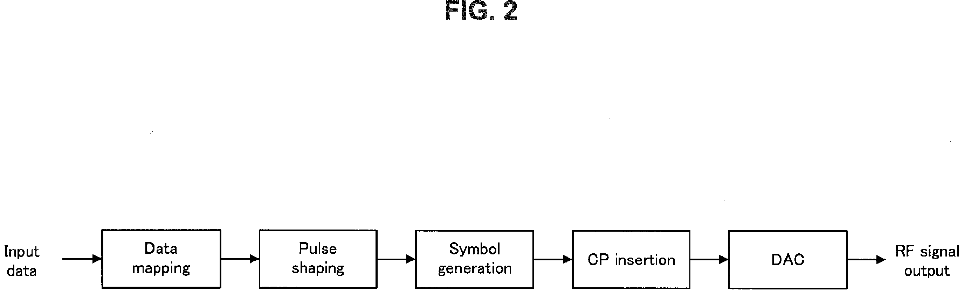

FIG. 2 is a diagram illustrating an example of a configuration example of a transmission apparatus supporting GFDM. First, if data is input, the transmission apparatus performs mapping of input data in order to apply filtering corresponding to the number of subcarriers and the number of subsymbols which are variably set. Further, here, the mapping for the subsymbol has an effect equivalent to that when over sampling (up sampling) is performed as compared with OFDM. Then, the transmission apparatus applies a pulse shaping filter to a predetermined number of subcarriers and a predetermined number of subsymbols (more specifically, multiplies by a predetermined filtering coefficient). Then, the transmission apparatus performs a frequency-time transform on a waveform after pulse shaping, and generates a symbol. Finally, the transmission apparatus adds a CP, applies a digital to analog converter (DAC), and outputs a radio frequency (RF) signal to a high frequency circuit.

Here, GFDM modulation is indicated by the following formula.

[Math. 1]

$$g_{k,m}[n] = g[(n-mK) \bmod N] \cdot \exp\left[ j2\pi \frac{k}{K} n \right] \quad \cdots \quad (1)$$

[Math. 2]

$$x[n] = \sum_{m=0}^{M-1} \sum_{k=0}^{K-1} g_{k,m}[n] \cdot d_{k,m} \quad \cdots \quad (2)$$

Here, K represents the number of subcarriers, M represents the number of subsymbols, $d_{k,m}$ is input data corresponding to an m-th subsymbol of a k-th subcarrier, x[n] is an n-th value of N (= KM) pieces of output data, and $g_{k,m}[n]$ is a coefficient of a filter.

The n-th output sample value x[n] of a GFDM symbol is obtained by summing all values obtained by multiplying the GFDM coefficients corresponding to the mapped input data. When n varies from 0 to N, the filter coefficient varies in accordance with the above-described formula (2), and a total of N sample values are obtained per symbol. As a result, a sample value of a time waveform obtained by performing over sampling on the subsymbol K times is generated. In this case, K times M subsymbols, that is, KM (= N), output values are obtained. The transmission apparatus performs D/A conversion on the GFDM symbol obtained accordingly, performs desired amplification and frequency conversion through a high frequency circuit, and then transmits resulting data from an antenna.

Further, for example, a raised cosine (RC) filter, a root raised cosine (RRC) filter, an isotropic orthogonal transfer algorithm (IOTA) filter, or the like can be employed as the pulse shaping filter.

A relation between input data (vector) and output data (vector) in the formulated GFDM modulation is indicated by a matrix A as in the following formula.

[Math. 3]

$$\mathbf{x} = \mathbf{A} \cdot \mathbf{d} \quad \cdots \quad (3)$$

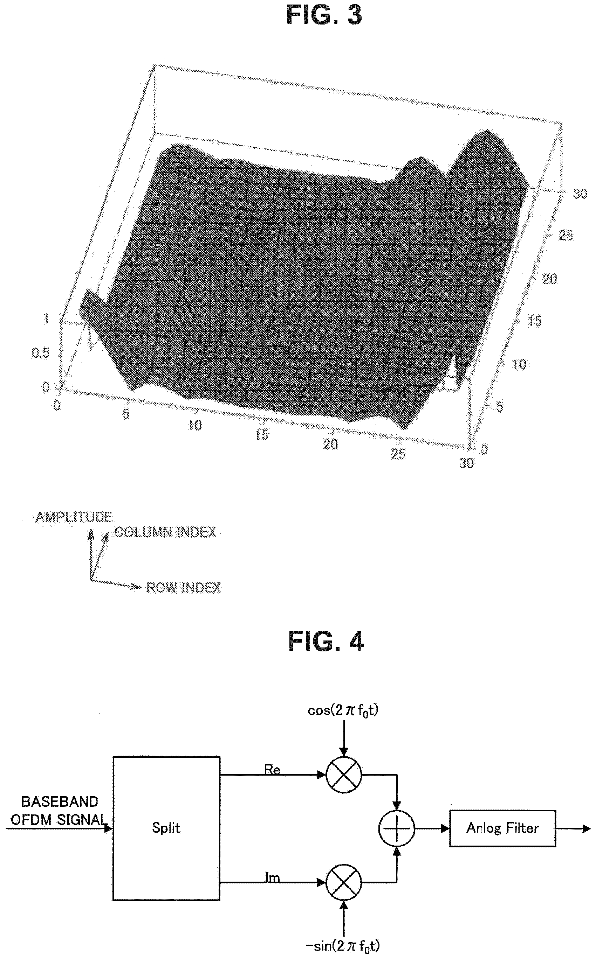

The transformation matrix A is a square matrix including complex elements having a size of KM*KM. FIG. 3 is a diagram on which amplitude values (absolute values) of the elements (that is, filter coefficients) of the transformation matrix A are plotted. FIG. 3 illustrates a case in which K = 4, M = 7, and an RC filter ($\alpha$ = 0.4) is employed as a prototype filter of waveform shaping.

<1.2. DC subcarrier>

In the case where the transmission apparatus adopts a communication method in which a multicarrier like OFDM or GFDM is used, the transmission apparatus generates a baseband signal typically according to digital signal processing in a generation process for a transmission carrier, performs digital-to-analog (DA) conversion, and performs orthogonal modulation.

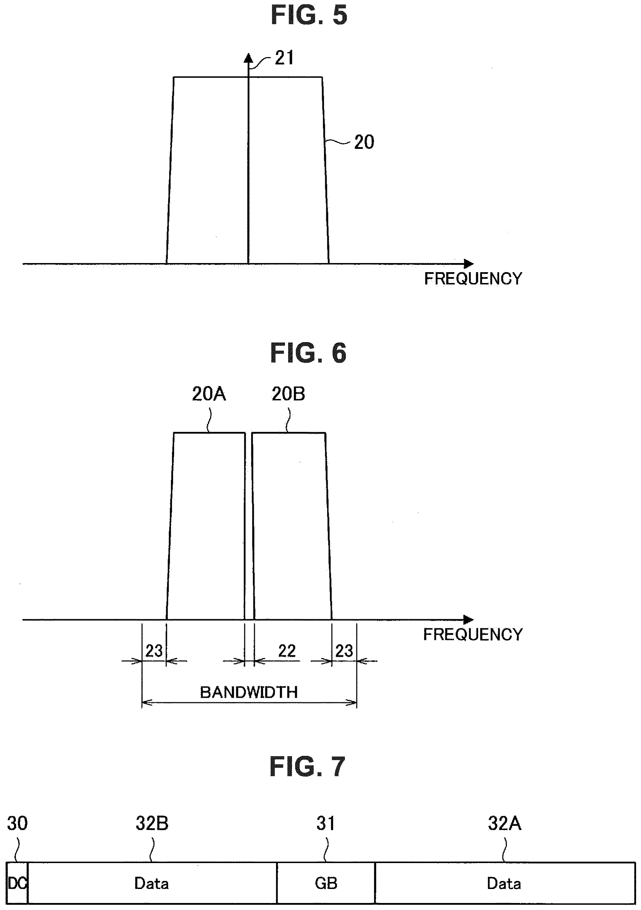

FIG. 4 is a diagram for describing a typical transmission carrier generation process in LTE. As illustrated in FIG. 4, the transmission apparatus divides a baseband OFDM signal into a real part and an imaginary part, performs orthogonal modulation for combination, and applies an analog filter to generate an OFDM carrier of a center frequency $f_0$. A carrier leak that can happen to this OFDM carrier will be described with reference to FIG. 5.

FIG. 5 is a diagram for describing a carrier leak that can happen to an OFDM carrier. The horizontal axis in FIG. 5 represents frequency, and the vertical axis represents, for example, amplitude. As illustrated in FIG. 5, in a spectrum 20 of a modulated wave to be output, a carrier leak 21 can happen to the central part of the bandwidth of an OFDM carrier. In the circuitry of a typical transmission apparatus, orthogonal modulation is performed by an analog circuit to reduce power to be consumed. It is a factor of carrier leak occurrence that the non-ideality of the analog circuit causes a DC offset component. In addition, when a signal component of a local transmitter is input into an orthogonal modulator, the signal component leaks to an output terminal beyond the isolation between terminals, which is also a factor of carrier leak occurrence.

A subcarrier including a carrier leak is also referred to as DC subcarrier. In a typical OFDM terminal, the DC subcarrier can be a factor that degrades signal quality and cause reception success probability to decrease. Accordingly, the DC subcarrier is not used. With reference to FIG. 6, the following describes an OFDM carrier.

FIG. 6 is a diagram for describing an example of a spectrum of an OFDM carrier. The horizontal axis in FIG. 6 represents frequency, and the vertical axis represents, for example, amplitude. As illustrated in FIG. 6, a DC subcarrier 22 is set in the central part of the bandwidth of an OFDM carrier. Spectra 20A and 20B of the modulated wave corresponding to a used subcarrier are generated across the DC subcarrier 22. To refrain from using the DC subcarrier 22, a transmission apparatus performs inverse fast Fourier transform (IFFT) transform with the input data corresponding to the DC subcarrier 22 regarded as having a predetermined value (e.g., zero), and generates a time waveform of an OFDM carrier. In addition, as illustrated in FIG. 6, guard bands 23 are set at both ends of the bandwidth of an OFDM carrier. The guard bands 23 are areas for facilitating an anti-aliasing filter to remove an aliasing distortion component caused when a time waveform of an OFDM carrier is subjected to digital-to-analog (DA) conversion. Similarly to the DC subcarrier 22, the transmission apparatus refrains from using the guard bands 23, so that the transmission apparatus stores, for example, a predetermined value (e.g., zero) in the input data corresponding to the guard bands 23.

FIG. 7 is a diagram illustrating an example of the configuration of input data for generating an OFDM modulated wave. The input data illustrated in FIG. 7 is input into an IFFT circuit. As illustrated in FIG. 7, the input data is sectioned into an area 30 corresponding to a DC subcarrier, an area 31 corresponding to a guard band, and areas 32A and 32B in which data is stored. An area 24 corresponding to a guard band is divided at the center, and each thereof corresponds to the guard band 23 in FIG. 6. The area 32A in which data is stored corresponds to the spectrum 20A in FIG. 6. In addition, the area 32B in which data is stored corresponds to the spectrum 20B in FIG. 6. Predetermined values are typically stored in the area 30 corresponding to a DC subcarrier and the area 31 corresponding to a guard band. In the case where these predetermined values are zero, it is possible to minimize power to be consumed.

<1.3. Technical problem>

In GFDM, similarly to OFDM, a transmission apparatus also generates an IQ baseband signal according to digital signal processing, and performs orthogonal modulation to generate a high-frequency signal. Thus, in GFDM, a carrier leak similar to that of OFDM can also occur. Therefore, in GFDM, it is also desirable similarly to OFDM to refrain from using a DC subcarrier.

In addition, in GFDM, a pulse shaping filter is used. Accordingly, signal leakage beyond a band is considered to be small, but it is desirable to set a guard band to remove an aliasing distortion component produced at the time of DA conversion. Therefore, in GFDM, it is also desirable similarly to OFDM to refrain from using a guard band.

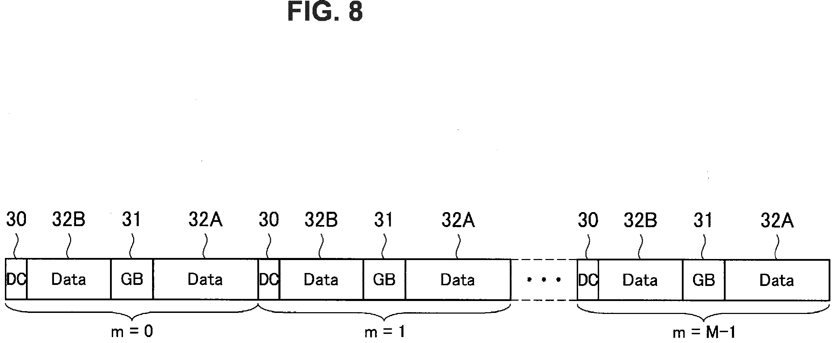

With reference to FIG. 8, the following describes an example of the configuration of GFDM input data in which a DC subcarrier and a guard band are set.

FIG. 8 is a diagram illustrating an example of the configuration of input data for generating a GFDM modulated wave. As illustrated in FIG. 8, input data includes M areas 30 corresponding to DC subcarriers, M areas 31 corresponding to guard bands, and M sets of data sectioned into the areas 32A and 32B in which data is stored. M corresponds to the number of subsymbols. In GFDM, a unit resource includes a plurality of subsymbols, so that a DC subcarrier and a guard band are inserted for each subsymbol.

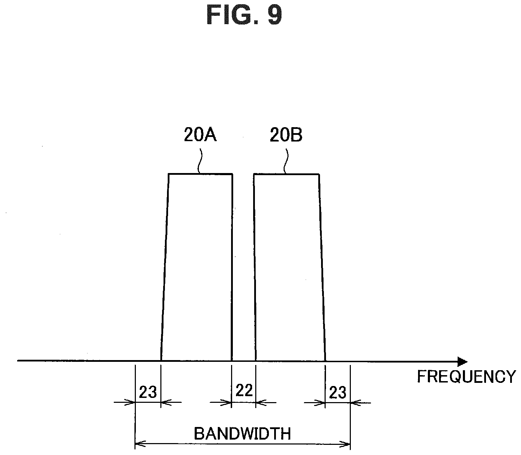

GFDM characteristically has the greater bandwidth of a subcarrier in reverse proportion to the number of subsymbols because the value of the product of the number of subcarriers and the number of subsymbols is typically a predetermined value. Such an increase in the bandwidth of a subcarrier can permit frequency synchronization accuracy eased more in GFDM than in OFDM. Meanwhile, an increase in the bandwidth of a subcarrier can decrease the frequency efficiency of a carrier. This point will be described in detail with reference to FIG. 9.

FIG. 9 is a diagram for describing an example of a spectrum of a GFDM carrier. The horizontal axis in FIG. 9 represents frequency, and the vertical axis represents, for example, amplitude. As illustrated in FIG. 9, a DC subcarrier 22 is set in the central part of the bandwidth of a GFDM carrier. Spectra 20A and 20B of the modulated wave corresponding to a used subcarrier are generated across the DC subcarrier 22, and guard bands 23 are set at both ends. A comparison of the DC subcarrier 22 in FIG. 9 with the DC subcarrier 22 in FIG. 6 shows that the DC subcarrier 22 in FIG. 9 has greater bandwidth. This results from the greater bandwidth of a subcarrier than that of OFDM, in which, in the case where the number of subsymbols is more than one, no symbol is divided (i.e., the number of subsymbols is 1).

In this way, in GFDM, the bandwidth of DC subcarriers sometimes widens as compared with OFDM. In that case, the frequency use efficiency is decreased by refraining from using DC subcarriers. In addition, as illustrated in FIG. 8, in GFDM, pieces of unused data for DC subcarriers which correspond to subsymbols in number (e.g., zero) are inserted, so that the frequency use efficiency can be further decreased.

«2. Schematic configuration of system»

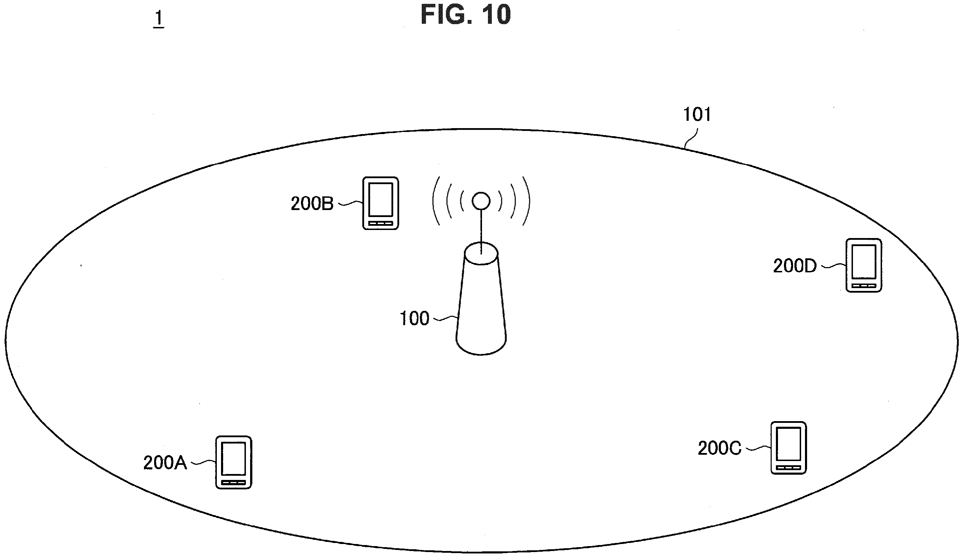

Next, a schematic configuration of a system 1 according to an embodiment of the present disclosure will be described with reference to FIG. 10. FIG. 10 is an explanatory diagram illustrating an example of a schematic configuration of the system 1 according to an embodiment of the present disclosure. Referring to FIG. 10, the system 1 includes a base station 100 and a terminal apparatus 200. Here, the terminal apparatus 200 is also referred to as a "user." The user may also be referred to as "user equipment (UE)." Here, the UE may be UE defined in LTE or LTE-A or may mean a communication apparatus more generally.

(1) Base station 100

The base station 100 is a base station of a cellular system (or a mobile communication system). The base station 100 performs wireless communication with a terminal apparatus (for example, the terminal apparatus 200) located within a cell 101 of the base station 100. For example, the base station 100 transmits a downlink signal to the terminal apparatus and receives an uplink signal from the terminal apparatus.

(2) Terminal apparatus 200

The terminal apparatus 200 can perform communication in the cellular system (or the mobile communication system). The terminal apparatus 200 performs wireless communication with the base station of the cellular system (for example, the base station 100). For example, the terminal apparatus 200 receives a downlink signal from the base station and transmits an uplink signal to the base station.

(3) Multiplexing/multiple access

Particularly, in an embodiment of the present disclosure, the base station 100 performs wireless communication with a plurality of terminal apparatuses via orthogonal multiple access/non-orthogonal multiple access. More specifically, the base station 100 performs wireless communication with a plurality of terminal apparatuses 200 through multiplexing/multiple access using GFDM.

For example, the base station 100 performs wireless communication with a plurality of terminal apparatuses 200 by multiplexing/multiple access using GFDM in the downlink. More specifically, for example, the base station 100 multiplexes signals destined for a plurality of terminal apparatuses 200 using GFDM. In this case, for example, the terminal apparatus 200 removes one or more other signals serving as interference from a multiplexed signal including a desired signal (that is, a signal destined for the terminal apparatus 200), and decodes the desired signal.

The base station 100 may perform wireless communication with a plurality of terminal apparatuses by multiplexing/multiple access using GFDM in the uplink instead of the downlink or together with the downlink. In this case, the base station 100 may decode each of signals from the multiplexed signal including the signals transmitted from a plurality of terminal apparatuses.

(4) Supplemental information

The present technology can also be applied to multi-cell systems such as heterogeneous networks (HetNet) or small cell enhancement (SCE). Further, the present technology can also be applied to MTC apparatuses and IoT apparatuses.

<<3. Configuration of each apparatus>>

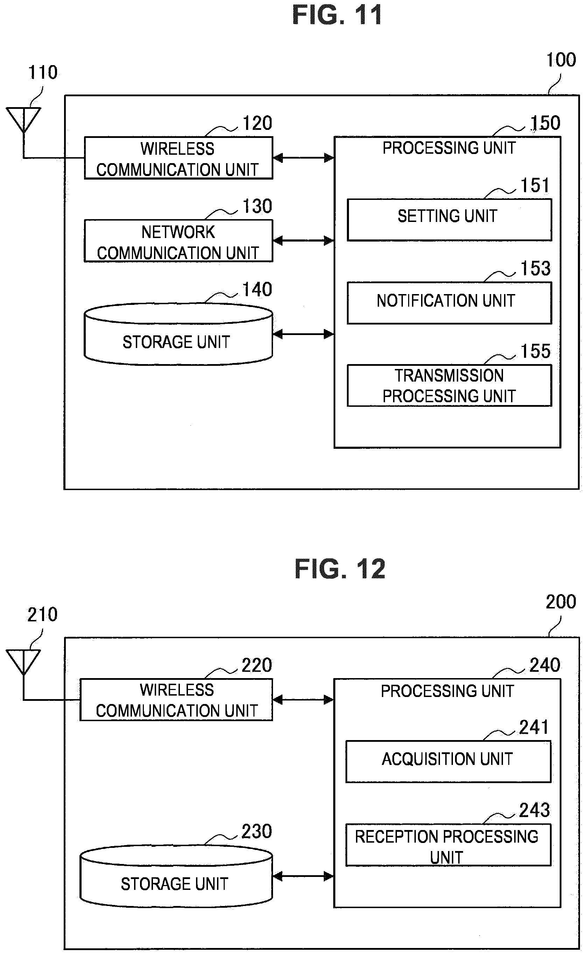

Next, configurations of the base station 100 and the terminal apparatus 200 according to the present disclosure will be described with reference to FIGS. 11 and 12.

<3.1. Configuration of base station>

First, an example of a configuration of the base station 100 according to an embodiment of the present disclosure will be described with reference to FIG. 11. FIG. 11 is a block diagram illustrating an example of a configuration of the base station 100 according to an embodiment of the present disclosure. Referring to FIG. 11, the base station 100 includes an antenna unit 110, a wireless communication unit 120, a network communication unit 130, a storage unit 140, and a processing unit 150.

(1) Antenna unit 110

The antenna unit 110 radiates signals outputted from the wireless communication unit 120 into space as radio waves. Further, the antenna unit 110 converts radio waves in space into signals, and outputs the signals to the wireless communication unit 120.

(2) Wireless communication unit 120

The wireless communication unit 120 transmits and receives signals. For example, the wireless communication unit 120 transmits a downlink signal to the terminal apparatus, and receives an uplink signal from the terminal apparatus.

(3) Network communication unit 130

The network communication unit 130 transmits and receives information. For example, the network communication unit 130 transmits information to other nodes and receives information from the other nodes. Examples of other nodes include other base stations and core network nodes.

(4) Storage unit 140

The storage unit 140 temporarily or permanently stores programs and various types of data for an operation of the base station 100.

(5) Processing unit 150

The processing unit 150 provides various functions of the base station 100. The processing unit 150 includes a setting unit 151, a notification unit 153, and a transmission processing unit 155. Note that the processing unit 150 may further include components other than these components. In other words, the processing unit 150 may also perform operations other than the operations of these components.
The functions of the setting unit 151, the notification unit 153, and the transmission processing unit 155 will be described below in detail.

<3.2. Configuration of terminal apparatus>

First, an example of the configuration of the terminal apparatus 200 according to an embodiment of the present disclosure will be described with reference to FIG. 12. FIG. 12 is a block diagram illustrating an example of a configuration of a terminal apparatus 200 according to an embodiment of the present disclosure. Referring to FIG. 12, the terminal apparatus 200 includes an antenna unit 210, a wireless communication unit 220, a storage unit 230, and a processing unit 240.

(1) Antenna unit 210

The antenna unit 210 radiates signals outputted from the wireless communication unit 220 into space as radio waves. Further, the antenna unit 210 converts radio waves in space into signals, and outputs the signals to the wireless communication unit 220.

(2) Wireless communication unit 220

The wireless communication unit 220 transmits and receives signals. For example, the wireless communication unit 220 receives a downlink signal from the base station and transmits an uplink signal to the base station.

(3) Storage unit 230

The storage unit 230 temporarily or permanently stores programs and various types of data for an operation of the terminal apparatus 200.

(4) Processing unit 240

The processing unit 240 provides various functions of the terminal apparatus 200. The processing unit 240 includes an acquisition unit 241 and a reception processing unit 243. Note that the processing unit 240 may further include components other than these components. In other words, the processing unit 240 may also perform operations other than the operations of these components.
The functions of the acquisition unit 241 and the reception processing unit 243 will be described below in detail.

<<4. Technical features>>

Technical features of the present embodiment will be described below under the assumption that the base station 100 is a transmission apparatus, and the terminal apparatus 200 is a reception apparatus.

<4.1. GFDM modulation/demodulation>

The base station 100 performs GFDM modulation. First, the base station 100 (e.g., setting unit 151) performs resource setting for a unit resource including one or more subcarriers or one or more subsymbols. Specifically, the base station 100 variably sets at least any of the number of subcarriers or the number of subsymbols included in a unit resource. In other words, the base station 100 variably sets at least any of the bandwidth of a subcarrier or the time length of a subsymbol included in a unit resource. The base station 100 (e.g., transmission processing unit 155) then performs up sampling, and performs filtering for each subcarrier with a pulse shaping filter (i.e., multiplies a filter coefficient).
The terminal apparatus 200 according to the present embodiment receives a signal subjected to GFDM modulation and transmitted, and performs GFDM demodulation. Specifically, the terminal apparatus 200 (e.g., reception processing unit 243) receives and demodulates a signal transmitted by variably setting at least any of the number of subcarriers or the number of subsymbols (i.e., bandwidth of a subcarrier or time length of a subsymbol) included in a unit resource, and acquires data. At that time, the terminal apparatus 200 applies the pulse shaping filter corresponding to the pulse shaping filter applied on the transmission side (i.e., multiplies a filter coefficient), and performs the down sampling corresponding to the up sampling applied on the transmission side.

<4.2. Use of bandwidth of unused subcarrier>

The base station 100 (e.g., transmission processing unit 155) multiples a used subcarrier of the second resource on an unused subcarrier of the first resource. The following describes this point in detail.

(1) Use of bandwidth of DC subcarrier

- Resource multiplexing

The base station 100 sets, as used subcarriers, at least a part of the frequency bands corresponding to unused subcarriers of the first resource in the second resource including a unit resource in which subcarriers has less bandwidth than in the first resource. This allows at least a part of the unused subcarriers in the first resource to be used as used subcarriers in the second resource, and allows the frequency use efficiency to be improved. Note that the less bandwidth of the subcarriers in the second resource than in the first resource may mean a smaller number of subsymbols in a unit resource in the second resource than in the first resource.

For example, the unused subcarriers of the first resource may include the DC subcarriers of the first resource. In this case, a decrease in frequency use efficiency caused by the greater bandwidth of the DC subcarriers than that of OFDM can be reduced.

The base station 100 sets the frequency band corresponding to a used subcarrier of the first resource in the second resource as an unused subcarrier. This prevents a used subcarrier of the first resource from overlapping with a used subcarrier of the second resource, and makes it possible to suppress the interference between these.

The base station 100 stores zero in the unused subcarriers of the first resource and the second resource. This makes it possible to minimize power to be consumed as compared with the case where another predetermined value is stored.

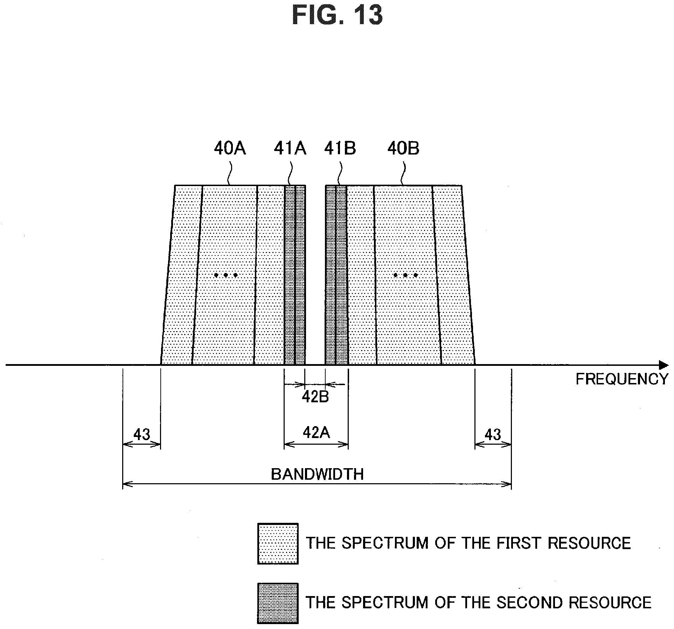

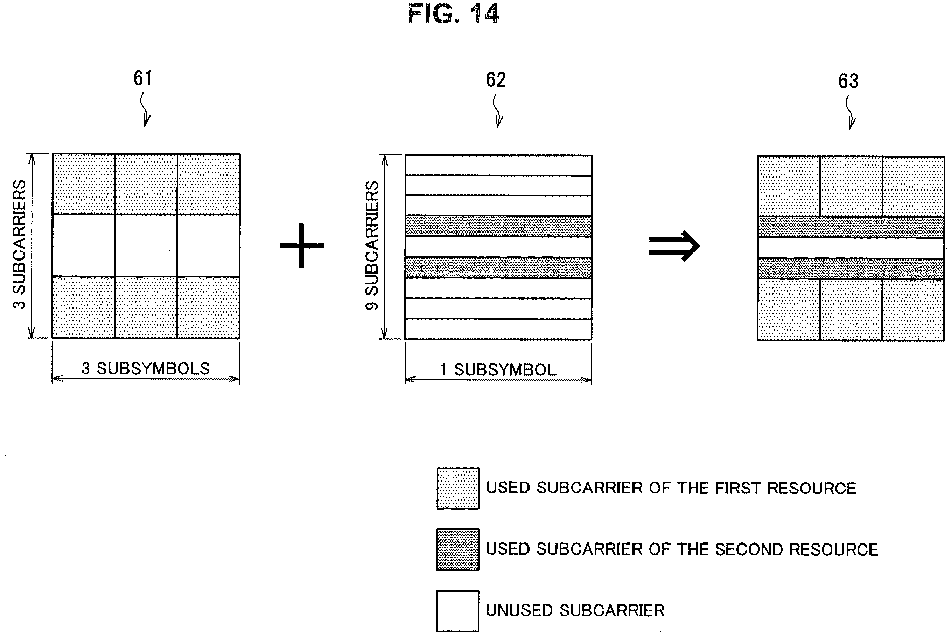

Here, with reference to FIGS. 13 and 14, an example will be described in which a used subcarrier of the second resource is multiplexed on a DC subcarrier of the first resource.

FIG. 13 is a diagram for describing an example of a spectrum of a GFDM carrier according to the present embodiment. The horizontal axis in FIG. 13 represents frequency, and the vertical axis represents, for example, amplitude. FIG. 13 illustrates spectra 40A and 40B corresponding to the first resource, and spectra 41A and 41B corresponding to the second resource. As illustrated in FIG. 13, DC subcarriers 42A and 42B are set in the central part of the bandwidth of a GFDM carrier, and guard bands 43 are set at both ends. Here, the DC subcarrier 42A is a DC subcarrier of the first resource. As illustrated in FIG. 13, the spectra 41A and 41B corresponding to the second resource are multiplexed on the DC subcarrier 42A of the first resource. In this way, at least a part of the unused DC subcarriers in the first resource can be used as used subcarriers in the second resource, which allows the frequency use efficiency to be improved.

The DC subcarrier 42B illustrated in FIG. 13 is a DC subcarrier of the second resource. In this way, in the second resource, a subcarrier including a carrier leak in the central part of a carrier can also be a DC subcarrier, and set as an unused subcarrier. Here, the base station 100 performs multiplexing by setting the same center frequency for carriers of the first resource and the second resource. This allows a local signal leakage component produced when the first resource is generated to be included in a DC subcarrier of the second resource. Then, the subcarrier including a local signal leakage component is not still used, so that it is possible to retain the reception success probability.

FIG. 14 is a diagram schematically illustrating a multiplexed resource according to the present embodiment. As illustrated in FIG. 14, once the GFDM signal corresponding to a first resource 61 is multiplexed on the GFDM signal corresponding to a second resource 62, the GFDM signal corresponding to a multiplexed resource 63 is generated. As illustrated in FIG. 14, in the first resource 61, the DC subcarrier at the center is not used, but the remainder is a used subcarrier. In addition, in the second resource 62, in the subcarrier corresponding to a DC subcarrier of the first resource 61, the DC subcarrier at the center is not used, but the remainder is a used subcarrier. Further, in the second resource 62, the subcarrier corresponding to a used subcarrier of the first resource 61 is not used.

For the sake of simplicity here, as a GFDM carrier, a unit resource having a subsymbol length of 50 us and a subcarrier bandwidth of 20 kHz when the number of subsymbols is 1 and the number of subcarriers is 9 is conceived as a standard. In this case, the bandwidth of the GFDM carrier is 180 kHz. As illustrated in FIG. 14, in the first resource 61, the number of subsymbols is 3 and the number of subcarriers is 3, so that the bandwidth of the subcarriers is 60 kHz. Meanwhile, in the second resource, the number of subsymbols is 1 and the number of subcarriers is 9, so that the bandwidth of the subcarriers is 20 kHz. Thus, in the first resource 61, a bandwidth of 60 kHz is not used. The multiplexing of the second resource 62 reduces unused bandwidth to 20 kHz in the multiplexed resource 63. In this way, frequency use efficiency is improved. Needless to say, the number of subsymbols of the second resource does not have to be 1, but may be, for example, 2 or more.

As illustrated in FIG. 14, it is desirable that the number of subcarriers of a unit resource included in the second resource be an odd number. In that case, the number of DC subcarriers in the second resource is one. Accordingly, it is possible to minimize a decrease in frequency efficiency. In addition, as illustrated in FIG. 14, it is desirable that the bandwidth of a subcarrier of a unit resource included in the first resource be an integer multiple of the bandwidth of a subcarrier of a unit resource included in the second resource. According to this condition, unused subcarriers of the first resource are compensated by the same number of used subcarriers of the second resource. Here, as illustrated in FIG. 14, the product of the number of subcarriers and the number of subsymbols is considered to be the same between a unit resource included in the first resource and a unit resource included the second resource. In that case, the above-described condition can also be said to means that the number of subcarriers of a unit resource included in the second resource is an integer multiple of the number of subcarriers of a unit resource included in the first resource. Needless to say, as long as the above-described condition is satisfied, the product of the number of subcarriers and the number of subsymbols may be different between a unit resource included in the first resource and a unit resource included in the second resource.

- GFDM modulation that entails resource multiplexing

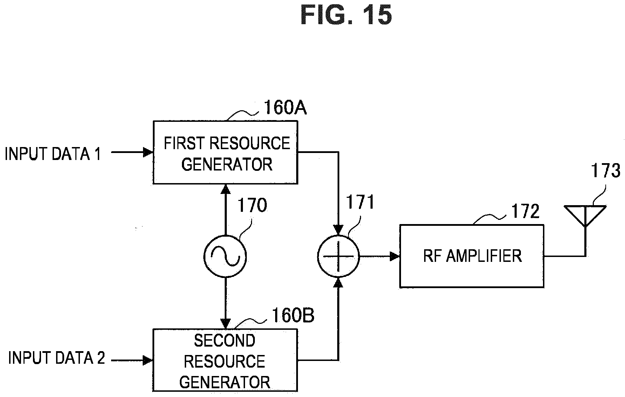

The base station 100 performs GFDM modulation that entails resource multiplexing. Specifically, the base station 100 performs filtering on and multiplexes each of the first resource and the second resource for each subcarrier. With reference to FIGS. 15 to 17, the following describes an example of signal processing for the base station 100 to multiplex the first resource and the second resource as described above.

FIG. 15 is a diagram for describing an example of a GFDM modulation process that entails resource multiplexing and is performed by the base station 100 according to the present embodiment. As illustrated in FIG. 15, the base station 100 includes a first resource generator 160A, a second resource generator 160B, a local oscillator 170, an adder 171, an RF amplifier 172, and an antenna 173. First, the first resource generator 160A generates a GFDM signal from input data 1 (i.e., first input data stored in the first resource) on the basis of the resource setting of the first resource. Meanwhile, the second resource generator 160B generates a GFDM signal from input data 2 (i.e., second input data stored in the second resource) on the basis of the resource setting of the second resource. Here, the first resource generator 160A and the second resource generator 160B receive the same local signals output from the same local oscillator 170. This causes carriers of the first resource and the second resource to have the same center frequency. The base station 100 then uses the adder 171 to add (i.e., multiplex) the GFDM signal output from each of the first resource generator 160A and the second resource generator 160B, and generates the GFDM carrier illustrated in FIG. 13. Then, the base station 100 amplifies the generated GFDM carrier with the RF amplifier 172 for transmission from the antenna 173.

Note that the antenna 173 may correspond to the antenna unit 110, the RF amplifier 172 may correspond to the wireless communication unit 120, and the other components may correspond to the transmission processing unit 155. Needless to say, components may also correspond to any other components.

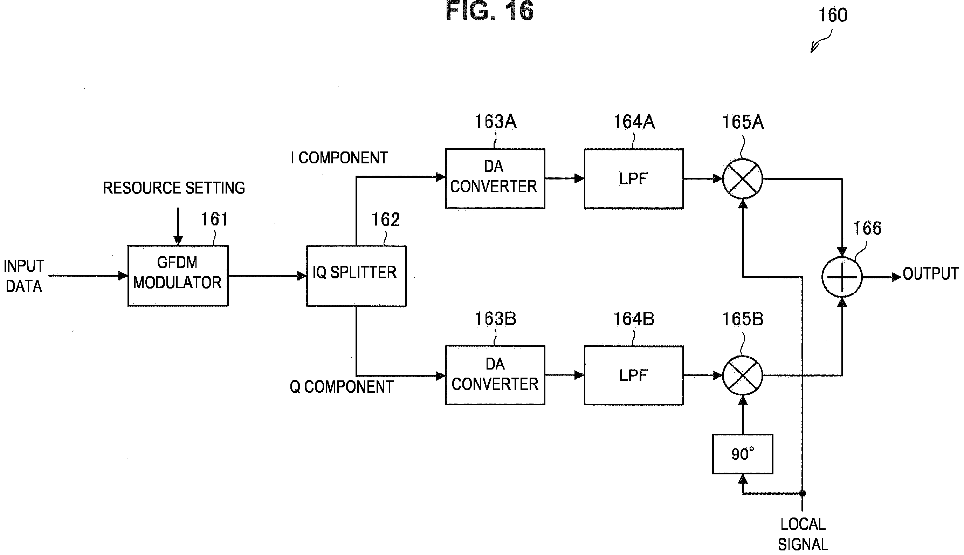

Next, with reference to FIG. 16, the internal configuration of a resource generator 160 will be described. Note that the first resource generator 160A and the second resource generator 160B have the same internal configuration. In the case where there is no need to particularly distinguish these, they will be generically referred to as resource generator 160.

FIG. 16 is a diagram illustrating an example of the internal configuration of the resource generator 160 of the base station 100 according to the present embodiment. As illustrated in FIG. 16, the resource generator includes a GFDM modulator 161, an IQ splitter 162, DA converters 163A and 163B, Low-pass filters (LPFs) 164A and 164B, multipliers 165A and 165B, and an adder 166. First, the resource generator 160 modulates input data with the GFDM modulator 161 to generate a GFDM signal. As a premise, on the basis of the number of subsymbols indicated by the resource setting, zero data corresponding to a DC subcarrier and a guard band is considered to be inserted into input data. The resource generator 160 maps the input data to a unit resource including a number of subsymbols and a number of subcarriers indicated by the resource setting, and applies a pulse shaping filter to generate a GFDM signal. The pulse shaping filter is applied in accordance with the formulas (1) to (3) above. The resource generator 160 then applies the IQ splitter 162 to the generated GFDM signal to split the generated GFDM signal into an I component or a Q component, and converts each of them by using the DA converter 163 to remove an aliasing distortion component with the LPF 164. Then, the resource generator 160 uses the multiplier 165A to multiply the I component by a local signal and uses the multiplier 165B to multiply the Q component by a local signal whose phase is shifted by 90 degrees. The resource generator 160 adds each of them with the adder 166 to perform orthogonal modulation.

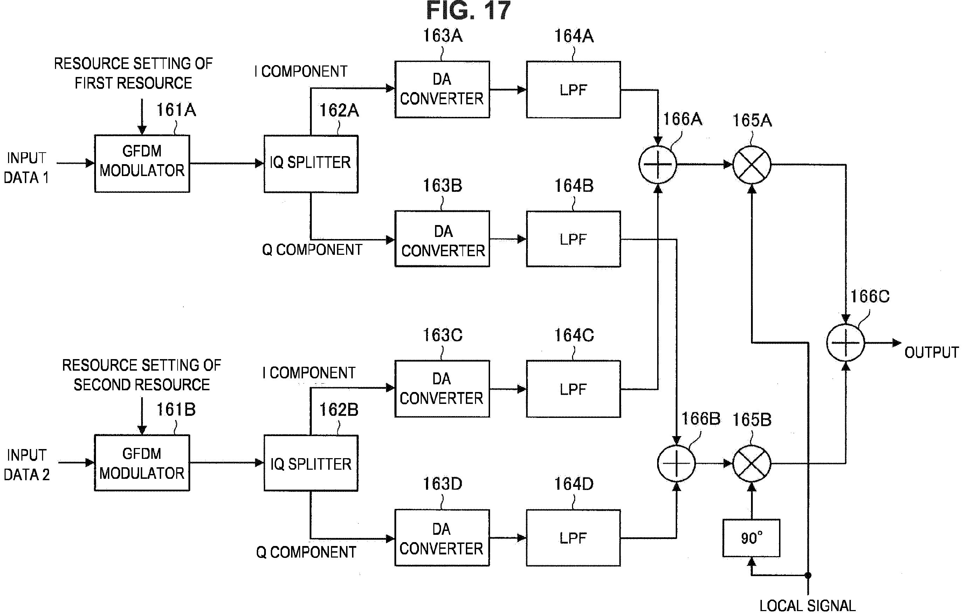

The above describes an example of the GFDM modulation process. In the examples illustrated in FIGS. 15 and 16, the base station 100 individually generates the carriers corresponding to the first resource and the second resource, and adds them in intermediate frequency (IF) frequency. In contrast, as illustrated in FIG. 17, a configuration example is also conceivable in which each of I/Q signals is added in the baseband, and orthogonal modulation is then performed.

FIG. 17 is a diagram illustrating an example of a GFDM modulation process that entails resource multiplexing and is performed by the base station 100 according to the present embodiment. As illustrated in FIG. 17, the base station 100 includes GFDM modulators 161A and 161B, IQ splitters 162A and 162B, DA converters 163A to 163D, LPFs 164A to 164D, adders 166A to 166C, and multipliers 165A and 165B. First, the base station 100 modulates each of first input data and second input data with the GFDM modulator 161A or 161B to generate GFDM signals. Then, the base station 100 applies the IQ splitter 162A or 162B to each of the GFDM signals to split each of the GFDM signals into an I component or a Q component, and converts the respective components with the DA converters 163A to 163D to remove aliasing distortion components with the LPFs 164A to 164D. The base station 100 then adds the each of the I components or the Q components of the GFDM signals of the first input data and the second input data with the adder 166A or 166B, and performs orthogonal modulation on them with the multipliers 165A and 165B, and the adder 166C.

- Input data

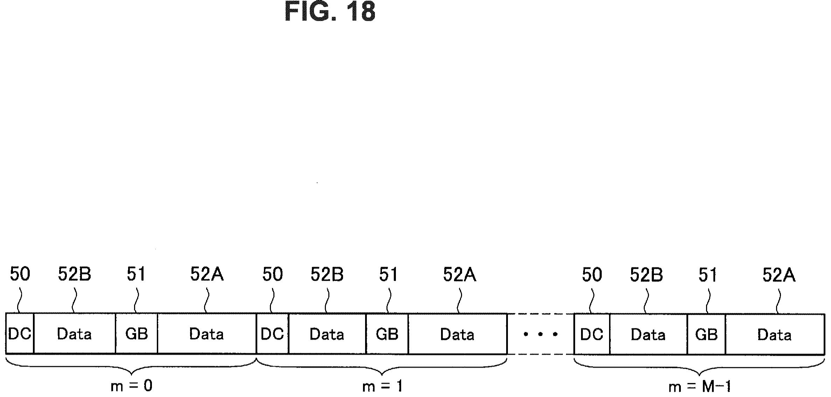

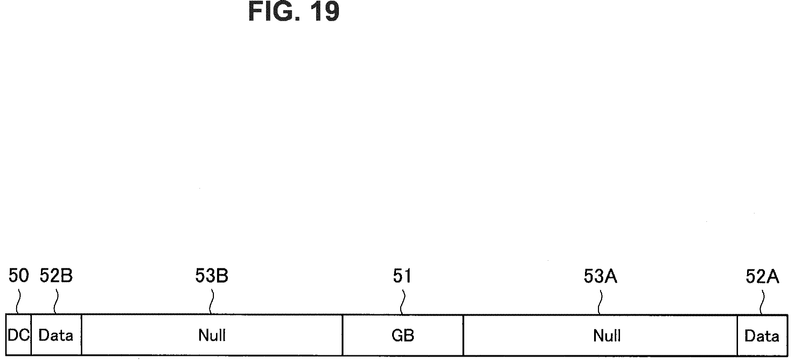

Next, with reference to FIGS. 18 and 19, the first input data and the second input data will be described in detail.

FIG. 18 is a diagram for describing an example of the configuration of first input data stored in the first resource according to the present embodiment. As illustrated in FIG. 18, the first input data includes M areas 50 corresponding to DC subcarriers, M areas 51 corresponding to guard bands, and M sets of data sectioned into the areas 52A and 52B in which data is stored. M corresponds to the number of subsymbols. Each area 52A in which data is stored corresponds to the spectrum 40A corresponding to the first resource in FIG. 13. In addition, each area 52B in which data is stored corresponds to the spectrum 40B corresponding to the first resource in FIG. 13. As illustrated in FIG. 18, the number M of subsymbols in the first resource is a plural number (e.g., 10).

FIG. 19 is a diagram for describing an example of the configuration of the second input data that is stored in the second resource according to the present embodiment. As illustrated in FIG. 19, the second input data includes the area 50 corresponding to a DC subcarrier, the area 51 corresponding to a guard band, the areas 52A and 52B in which data is stored, and areas 53A and 53B corresponding to NULL subcarriers. Each area 52A in which data is stored corresponds to the spectrum 41A corresponding to the second resource in FIG. 13. In addition, each area 52B in which data is stored corresponds to the spectrum 41B corresponding to the first resource in FIG. 13. The NULL subcarrier refers to an unused subcarrier that is set except for a DC subcarrier or a guard band. The areas 53A and 53B corresponding to NULL subcarriers are areas that correspond to the frequency bands (i.e., spectra 40A and 40B) corresponding to used subcarriers of the first resource in the second resource, and, for example, zero is stored therein. As illustrated in FIG. 19, the number M of subsymbols in the second resource is 1.

(2) Use of bandwidth of NULL subcarrier

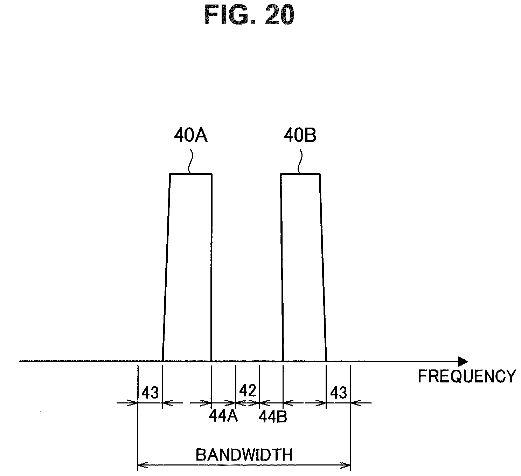

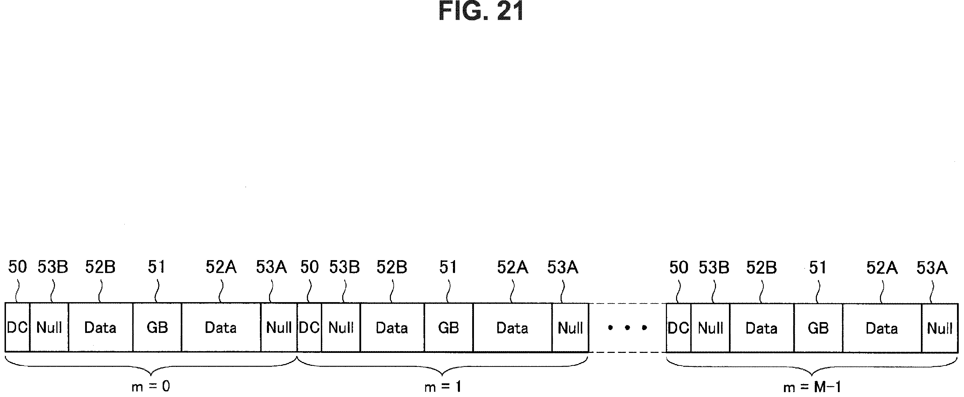

For example, the unused subcarriers of the first resource may include a subcarrier around the DC subcarriers of the first resource. That is, the base station 100 may set any number of subcarriers around a DC subcarrier of the first resource as NULL subcarriers, and set at least a part of the NULL subcarriers as used subcarriers in the second resource. In this case, it is possible to secure more used subcarriers in the second resource. With reference to FIG. 20, the following describes an example of the spectrum of the GFDM carrier corresponding to the first resource in this case. Next, with reference to FIG. 21, an example of the corresponding first input data will be described.

FIG. 20 is a diagram for describing an example of a spectrum of a GFDM carrier corresponding to the first resource according to the present embodiment. The horizontal axis in FIG. 20 represents frequency, and the vertical axis represents, for example, amplitude. As illustrated in FIG. 20, a DC subcarrier 42 is set in the central part of the bandwidth of a GFDM carrier, and NULL subcarriers 44A and 44B are set on both sides of the DC subcarrier 42. Then, the spectra 40A and 40B of the modulated waves corresponding to used subcarriers are generated across the NULL subcarriers 44A and 44B, and the guard bands 43 are set at both ends.

FIG. 21 is a diagram for describing an example of the configuration of the first input data stored in the first resource according to the present embodiment. As illustrated in FIG. 21, the first input data includes M sets of data sectioned into the areas 50 corresponding to DC subcarriers, the areas 51 corresponding to guard bands, the areas 52A and 52B in which data is stored, and the areas 53A and 53B corresponding to NULL subcarriers. M corresponds to the number of subsymbols. Note that each of the areas 53A corresponding to NULL subcarriers corresponds to the NULL subcarrier 44A in FIG. 20. In addition, each of the areas 53B corresponding to NULL subcarriers corresponds to the NULL subcarrier 44B in FIG. 20.

(3) Use of bandwidth of guard band

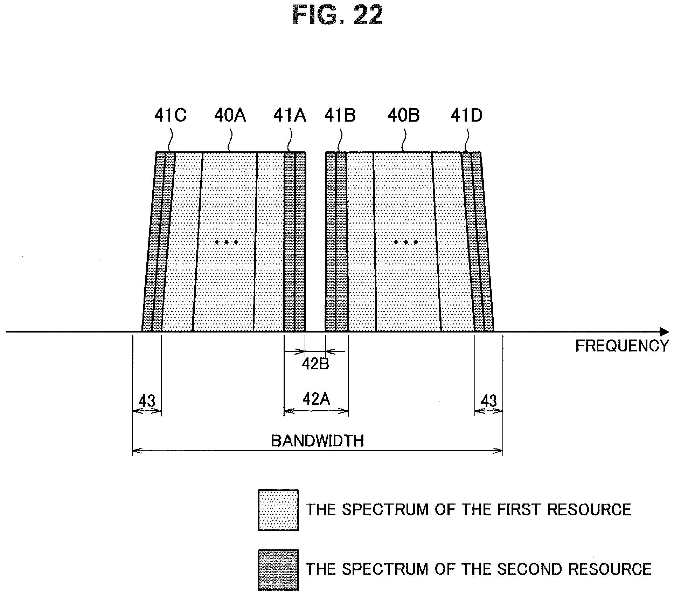

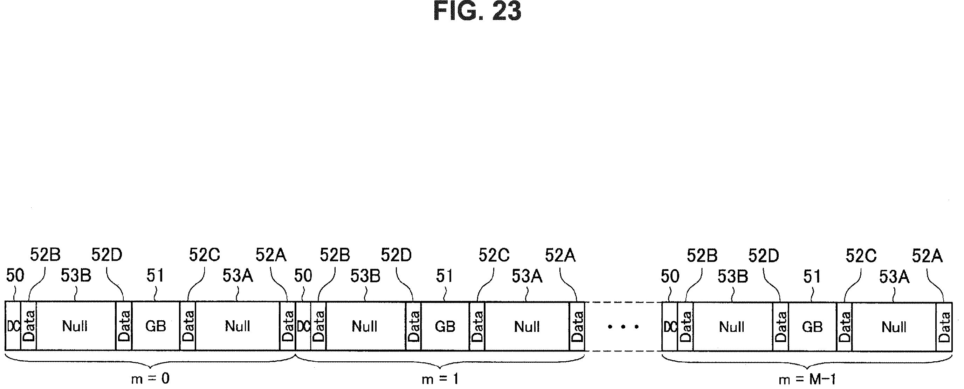

An unused subcarrier of the first resource may include a guard band. For example, the base station 100 may set at least a part of the guard bands of the first resource as a used subcarrier in the second resource. In this case, it is possible to secure more used subcarriers in the second resource. With reference to FIG. 22, the following describes an example of the spectrum of the GFDM carrier in this case. Next, with reference to FIG. 23, an example of the corresponding second input data will be described.

FIG. 22 is a diagram for describing an example of the spectrum of the GFDM carrier according to the present embodiment. The horizontal axis in FIG. 22 represents frequency, and the vertical axis represents, for example, amplitude. FIG. 22 illustrates spectra 40A and 40B corresponding to the first resource, and spectra 41A to 41D corresponding to the second resource. As illustrated in FIG. 22, DC subcarriers 42A and 42B are set in the central part of the bandwidth of a GFDM carrier, and guard bands 43 are set at both ends. Here, the DC subcarrier 42A is a DC subcarrier of the first resource. The DC subcarrier 42B is a DC subcarrier of the second resource. As illustrated in FIG. 22, the spectra 41A and 41B corresponding to the second resource are multiplexed on the DC subcarrier 42A of the first resource. Further, as illustrated in FIG. 22, the spectra 41C and 41D corresponding to the second resource are multiplexed on a part of the guard bands 43 of the first resource. In this way, at least a part of the unused guard bands in the first resource can be used as used subcarriers in the second resource, which allows the frequency use efficiency to be improved.

FIG. 23 is a diagram for describing an example of the configuration of the second input data that is stored in the second resource according to the present embodiment. As illustrated in FIG. 23, the second input data includes M sets of data sectioned into the areas 50 corresponding to DC subcarriers, the areas 51 corresponding to guard bands, the areas 52A to 52D in which data is stored, and the areas 53A and 53B corresponding to NULL subcarriers. M corresponds to the number of subsymbols. Note that each area 52A in which data is stored corresponds to the spectrum 41A corresponding to the second resource in FIG. 22. Each area 52B in which data is stored corresponds to the spectrum 41B corresponding to the second resource in FIG. 22. Each area 52C in which data is stored corresponds to the spectrum 41C corresponding to the second resource in FIG. 22. Each area 52D in which data is stored corresponds to the spectrum 41D corresponding to the second resource in FIG. 22. The respective areas 53A and 53B corresponding to NULL subcarriers are areas that correspond to the frequency bands (i.e., spectra 40A and 41B) corresponding to used subcarriers of the first resource in the second resource, and, for example, zero is stored therein.

Note that the unused subcarriers of the first resource may include the subcarriers around the guard band of the first resource. That is, the base station 100 may set any number of subcarriers around a guard band of the first resource as NULL subcarriers, and set at least a part of the NULL subcarriers as used subcarriers in the second resource. In this case, it is possible to secure more used subcarriers in the second resource.

<4.3. Setting information>

(1) Notification of setting information

The base station 100 (e.g., notification unit 153) notifies another apparatus (e.g., terminal apparatus 200) of setting information indicating the setting related to the first resource and the second resource. The terminal apparatus 200 (e.g., acquisition unit 241) acquires the setting information from the base station 100, and then can demodulate the first resource and the second resource.

The setting information can include information indicating the resource setting of each of the first resource and the second resource. In addition, the setting information can include information indicating a used subcarrier and an unused subcarrier of each of the first resource and the second resource. In addition, the setting information can include information indicating destinations of the first resource and the second resource.

For a notification of the setting information from the base station 100 to the terminal apparatus 200, for example, system information can be used. Besides, an individual signaling message such as radio resource control (RRC) signaling may be used.

Here, an example of the allocation of the first resource and the second resource will be described. For example, frequency synchronization accuracy that is eased more is desirable for a terminal such as a machine-type-communication (MTC) terminal that includes simplified hardware. Accordingly, it is desirable to allocate the first resource in which subcarriers have greater bandwidth. Meanwhile, the second resource may be allocated to a small amount of data that does not require low delay, but follows data transmitted and received in the first resource. Note that the destinations of the first resource and the second resource may be the same or different.

(2) Change in setting information

The base station 100 (e.g., setting unit 151) can change the resource setting of unit resources included in the first resource and/or the second resource. For example, the base station 100 (e.g., setting unit 151) may change the setting of a unit resource included in the second resource along with a change in the setting of a unit resource included in the first resource. In the case where the setting is changed, the base station 100 (e.g., notification unit 153) can notify the terminal apparatus 200 of the changed setting information. Then, the terminal apparatus 200 (e.g., acquisition unit 241) acquires the changed setting information, and reflects it in the demodulation process.

Note that, in the case where the setting related to the first resource and the second resource is changed, the base station 100 (e.g., notification unit 153) may issue a notification of the changed setting information of each of the first resource and the second resource, or only the changed setting information of the first resource. In the latter case, the terminal apparatus 200 (e.g., reception processing unit 243) complies with a predefined change rule to change the setting of the second resource on the basis of a change in the setting of the first resource. The base station 100 notifies the terminal apparatus 200 of this change rule in advance.

<4.4. Successive demodulation>

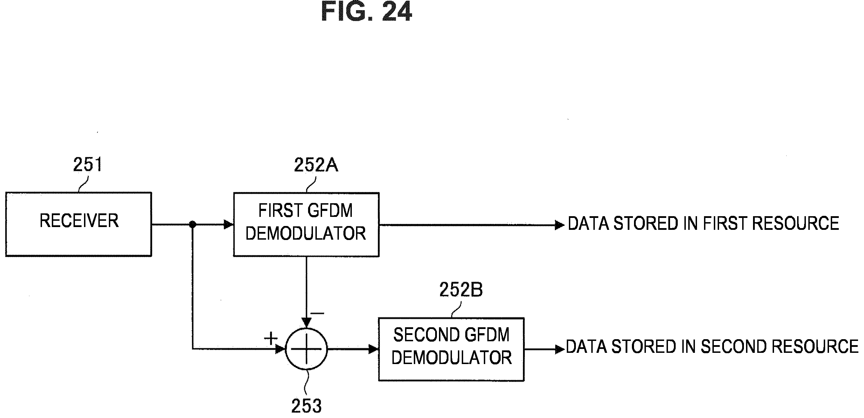

The terminal apparatus 200 (e.g., reception processing unit 243) demodulates the first resource and the second resource. At that time, the terminal apparatus 200 can perform successive demodulation with successive interference cancellation (SIC) technology, which is a demodulation technique for multiplexed signals. This point will be described in detail with reference to FIG. 24.

FIG. 24 is a diagram for describing an example of a successive GFDM demodulation process by the terminal apparatus 200 according to the present embodiment. As illustrated in FIG. 24, the terminal apparatus 200 includes a receiver 251, a first GFDM demodulator 252A, a second GFDM demodulator 252B, and an adder 253. The terminal apparatus 200 first inputs a carrier received by the receiver 251 into the first GFDM demodulator 252A to demodulate the first resource. If signal power provided to the first resource is sufficiently greater than signal power provided to the second resource, a signal transmitted in the first resource in demodulation has desired quality. Next, the terminal apparatus 200 uses the adder 253 to subtract the carrier component related to the first resource from the carrier received by the receiver 251. Then, the terminal apparatus 200 inputs the signal subjected to the subtraction into the second GFDM demodulator 252B to demodulate the second resource. This allows a second resource signal having relatively small energy to be more accurately demodulated. In this way, data stored in the first resource and data stored in the second resource are each output.

Note that the receiver 251 may correspond to the wireless communication unit 220, and the other components may correspond to the reception processing unit 243. Of course, any other correspondence relation is acceptable.

<4.5. Signal processing>

Next, signal processing for GFDM signals will be described.

(1) Signal processing related to transmission of GFDM signal

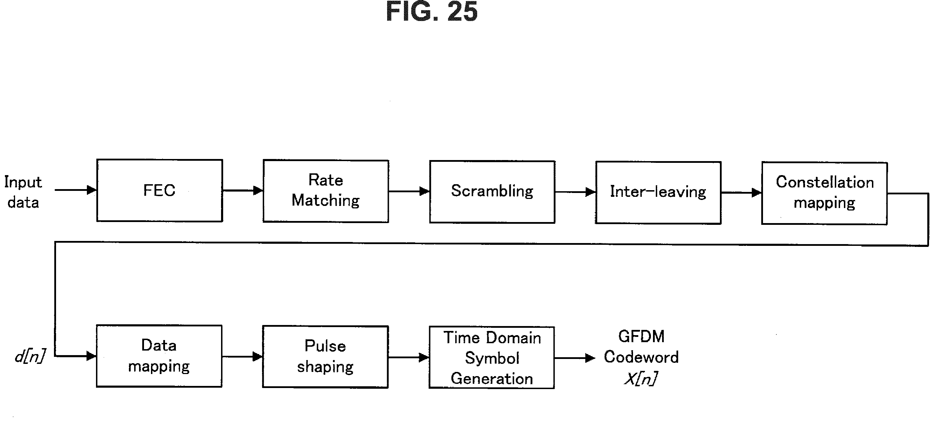

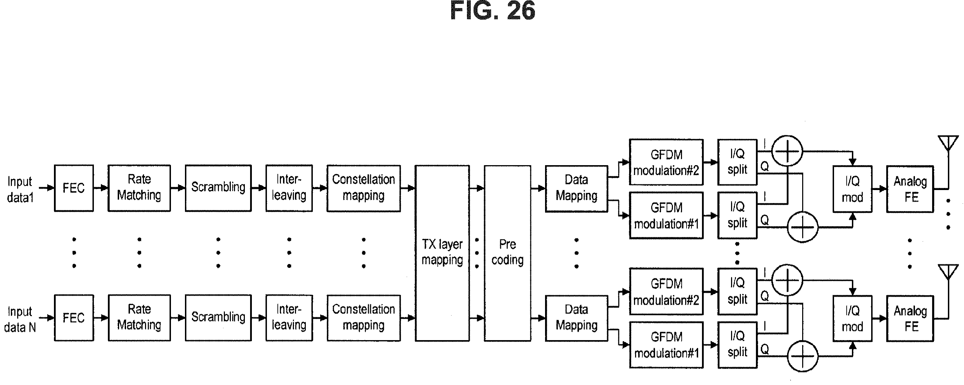

First, with reference to FIGS. 25 and 26, signal processing related to the transmission of a GFDM signal by the base station 100 will be described.

FIG. 25 is a diagram for describing an example of the signal processing related to the transmission of a GFDM signal by the base station 100 according to the present embodiment. The configuration illustrated in FIG. 25 is an example of the internal configuration of the GFDM modulator 161 illustrated in FIGS. 16 and 17. As illustrated in FIG. 25, the base station 100 performs forward error correction (FEC) coding, rate matching, scrambling, interleaving, and mapping (constellation mapping) from a bit string to a symbol (which may be, for example, a complex symbol or may also be referred to as a signal point) on input data.

The base station 100 performs a GFDM modulation process on the complex data obtained in this way. Specifically, the base station 100 first maps the complex data to a resource in accordance with the number K of subcarriers and the number M of subsymbols indicated by GFDM setting information. Next, the base station 100 applies a pulse shaping filter to mapped input data $d_{k,m}[n]$ to obtain output data $x[n]$ as shown in the formula (2) above. The base station 100 then generates a symbol in the time domain. Specifically, the base station 100 performs parallel-serial conversion on the output data $x[n]$ to obtain a GFDM symbol in the time domain, that is, a GFDM time waveform.

In this way, a GFDM codeword $X[n]$ is output.

Note that each component illustrated in FIG. 25 may correspond to the transmission processing unit 155. Of course, any other correspondence relation is acceptable.

The above describes an example of the signal processing related to the transmission of a GFDM signal. Next, the signal processing related to the transmission of GFDM signal in the case of MIMO will be described with reference to FIG. 26.

- Case of multiple-input and multiple-output (MIMO)

FIG. 26 is a diagram for describing an example of signal processing related to the transmission of GFDM signals according to MIMO by the base station 100 according to the present embodiment. FIG. 26 illustrates an example of the case where the process described above with reference to FIG. 17 is performed to multiplex the first resource and the second resource. As illustrated in FIG. 26, the base station 100 performs FEC encoding, rate matching, scrambling, interleaving, and mapping from a bit string to a symbol for each pieces of transmission data to be multiplexed. Then, the base station 100 performs multiplexing through transmission layer mapping and performs pre coding for each multiplexed signal. A subsequent process is performed for each multiplexed signal.

The base station 100 maps complex data to the first resource or the second resource in accordance with the number K of subcarriers and the number M of subsymbols indicated by GFDM setting information. The following processes have been described above with reference to FIG. 17. Specifically, the base station 100 performs GFDM modulation on each of the mapped first resource and second resource to generate a GFDM signal. Next, the base station 100 splits the IQ component of each GFDM signal, adds each of the I components or the Q components, and performs orthogonal modulation on the signals of the added I components and the signals of the added Q components.

Then, the base station 100 uses an analog FE to perform signal processing on the GFDM signals subjected to the orthogonal modulation, and transmits wireless signals from an antenna.

Note that the analog FE may correspond to the wireless communication unit 120, the antenna may correspond to the antenna unit 110, and the other components may correspond to the transmission processing unit 155. Of course, any other correspondence relation is acceptable.

(2) Signal processing related to reception of GFDM signal

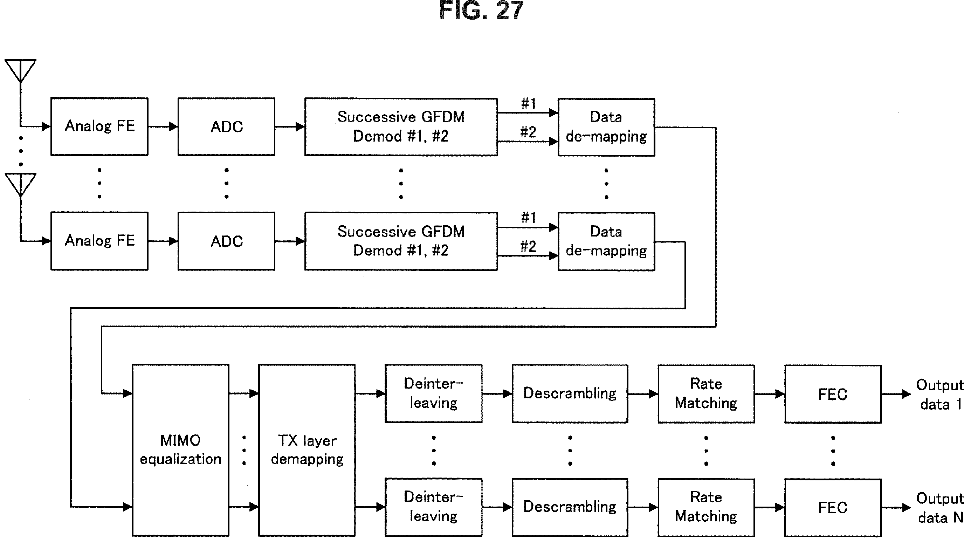

Next, with reference to FIG. 27, signal processing related to the reception of a GFDM signal by the terminal apparatus 200 will be described. Here, the case of MIMO will be described as an example.

FIG. 27 is a diagram for describing an example of the signal processing related to the reception of GFDM signals according to MIMO by the terminal apparatus 200 according to the present embodiment. As illustrated in FIG. 27, the terminal apparatus 200 uses an analog FE to perform signal processing on a signal received by an antenna, uses an analog-to-digital converter (ADC) to perform AD conversion, and performs successive GFDM demodulation (Successive GFDM Demod #1, #2). The successive GFDM demodulation has been described above with reference to FIG. 24. Data stored in the first resource (#1) and data stored in the second resource (#2) are each output. In the GFDM demodulator that demodulates each of the first resource and the second resource, the terminal apparatus 200 extracts original data d[0] to data d[N-1] from the received symbols x[0] to x[N-1]. To this end, the GFDM demodulator may be a circuit that multiplies a conjugate transpose matrix $A^H$ of A which is matching filter reception for the transformation matrix A of the GFDM used for transmission, a circuit that multiplies an inverse matrix $A^{-1}$ serving as zero force reception, a minimum mean square error (MMSE) reception circuit, or the like. Thereafter, the terminal apparatus 200 performs MIMO equalization and de-mapping of the transmission layer. Thereafter, the terminal apparatus 200 performs de-interleaving, de-scrambling, rate matching, and FEC decoding on each piece of reception data and outputs the resulting data.

Note that the analog FE may correspond to the wireless communication unit 220, the antenna may correspond to the antenna unit 210, and the other components may correspond to the reception processing unit 243. Of course, any other correspondence relation is acceptable.

<4.6. Processing flow>

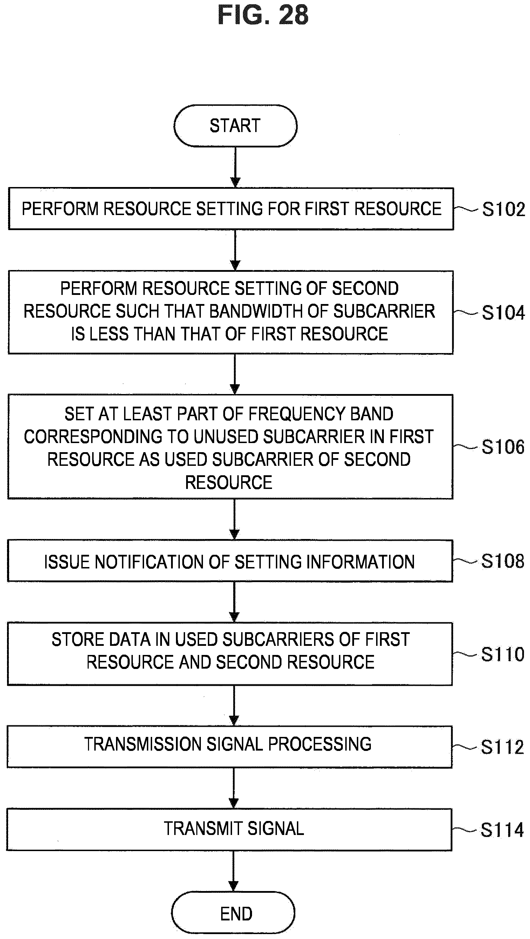

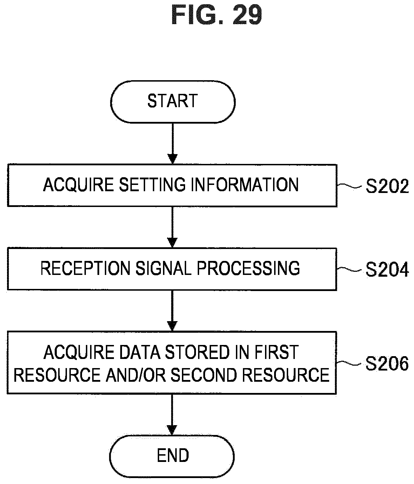

Next, the processing flow of the base station 100 and the terminal apparatus 200 will be described with reference to FIGS. 28 and 29.

FIG. 28 is a flowchart illustrating an example of the flow of the transmission process executed in the base station 100 according to the present embodiment. As illustrated in FIG. 28, the base station 100 first performs resource setting (i.e., setting of subsymbol length and setting of subcarrier frequency, or the number of subcarriers and the number of subsymbols in a unit resource) for the first resource (step S102). Then, the base station 100 performs the resource setting of the second resource such that the bandwidth of a subcarrier is less than that of the first resource (step S104). Next, the base station 100 sets at least a part of the frequency bands corresponding to the unused subcarriers in the first resource as a used subcarrier of the second resource (step S106). Then, the base station 100 notifies the terminal apparatus 200 of the setting information (step S108). Next, the base station 100 stores data in the unused subcarriers of the first resource and the second resource (step S110). Then, the base station 100 performs the transmission signal processing described above, for example, with reference to FIGS. 15 to 17, and FIGS. 25 and 26 (step S112), and transmits a signal (step S114).

FIG. 29 is a flowchart illustrating an example of the flow of reception processing executed in the terminal apparatus 200 according to the present embodiment. As illustrated in FIG. 29, the terminal apparatus 200 first acquires setting information of which the terminal apparatus 200 is notified by the base station 100 (step S202). Then, the terminal apparatus 200 performs the reception signal processing described above with reference to FIGS. 24 and 27 on the basis of the setting information (step S204), and acquires data stored in the first resource and/or the second resource (step S206).

<<5. Application examples>>

The technology according to the present disclosure is applicable to various products. The base station 100 may also be implemented, for example, as any type of evolved Node B (eNB) such as macro eNBs and small eNBs. Small eNBs may be eNBs that cover smaller cells than the macrocells, such as pico eNBs, micro eNBs, or home (femto) eNBs. Instead, the base station 100 may be implemented as another type of base station such as Nodes B or base transceiver stations (BTSs). The base station 100 may include the main apparatus (which is also referred to as base station apparatus) that controls wireless communication and one or more remote radio heads (RRHs) that are disposed at different locations from that of the main apparatus. Also, various types of terminals described below may function as the base station 100 by temporarily or semi-permanently executing the functionality of the base station. Furthermore, at least some of structural elements of the base station 100 may be realized in a base station apparatus or a module for a base station apparatus.

Further, the terminal apparatus 200 may be implemented, for example, as a mobile terminal such as smartphones, tablet personal computers (PCs), notebook PCs, portable game terminals, portable/dongle mobile routers, and digital cameras, or an in-vehicle terminal such as car navigation apparatuses. Further, the terminal apparatus 200 may be implemented as a machine type communication (MTC) terminal for establishing a machine to machine (M2M) communication. Furthermore, at least some of structural elements of the terminal apparatus 200 may be implemented as a module (e.g., integrated circuit module including a single die) that is mounted on these terminals.

<5.1. Application examples for base station>

(First application example)

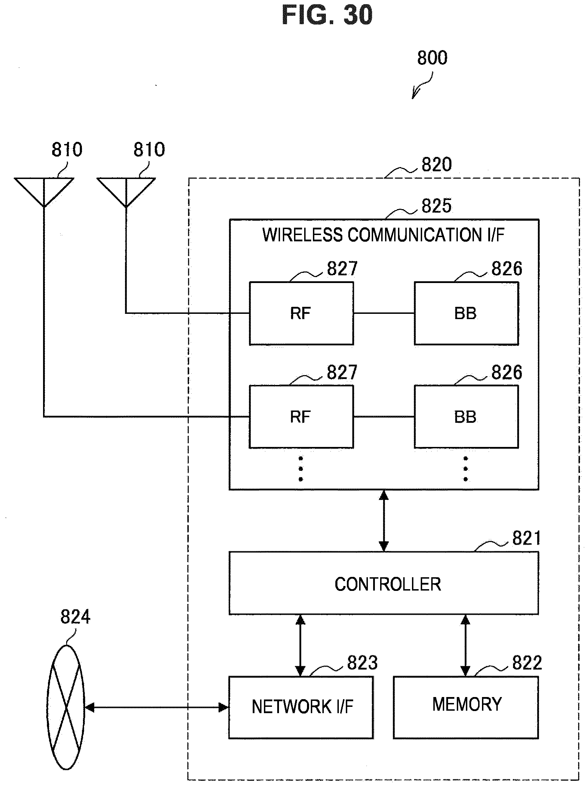

FIG. 30 is a block diagram illustrating a first example of a schematic configuration of an eNB to which the technology according to the present disclosure may be applied. An eNB 800 includes one or more antennas 810 and a base station apparatus 820. Each antenna 810 and the base station apparatus 820 may be connected to each other via an RF cable.

Each of the antennas 810 includes a single or a plurality of antenna elements (e.g., a plurality of antenna elements constituting a MIMO antenna) and is used for the base station apparatus 820 to transmit and receive a wireless signal. The eNB 800 may include the plurality of the antennas 810 as illustrated in FIG. 30, and the plurality of antennas 810 may, for example, correspond to a plurality of frequency bands used by the eNB 800. It should be noted that while FIG. 30 illustrates an example in which the eNB 800 includes the plurality of antennas 810, the eNB 800 may include the single antenna 810.

The base station apparatus 820 includes a controller 821, a memory 822, a network interface 823, and a wireless communication interface 825.

The controller 821 may be, for example, a CPU or a DSP, and operates various functions of an upper layer of the base station apparatus 820. For example, the controller 821 generates a data packet from data in a signal processed by the wireless communication interface 825, and transfers the generated packet via the network interface 823. The controller 821 may generate a bundled packet by bundling data from a plurality of baseband processors to transfer the generated bundled packet. Further, the controller 821 may also have a logical function of performing control such as radio resource control, radio bearer control, mobility management, admission control, and scheduling. Further, the control may be performed in cooperation with a surrounding eNB or a core network node. The memory 822 includes a RAM and a ROM, and stores a program executed by the controller 821 and a variety of control data (such as, for example, terminal list, transmission power data, and scheduling data).

The network interface 823 is a communication interface for connecting the base station apparatus 820 to the core network 824. The controller 821 may communicate with a core network node or another eNB via the network interface 823. In this case, the eNB 800 may be connected to a core network node or another eNB through a logical interface (e.g., S1 interface or X2 interface). The network interface 823 may be a wired communication interface or a wireless communication interface for wireless backhaul. In the case where the network interface 823 is a wireless communication interface, the network interface 823 may use a higher frequency band for wireless communication than a frequency band used by the wireless communication interface 825.

The wireless communication interface 825 supports a cellular communication system such as long term evolution (LTE) or LTE-Advanced, and provides wireless connection to a terminal located within the cell of the eNB 800 via the antenna 810. The wireless communication interface 825 may typically include a baseband (BB) processor 826, an RF circuit 827, and the like. The BB processor 826 may, for example, perform encoding/decoding, modulation/demodulation, multiplexing/demultiplexing, and the like, and performs a variety of signal processing on each layer (e.g., L1, medium access control (MAC), radio link control (RLC), and packet data convergence protocol (PDCP)). The BB processor 826 may have part or all of the logical functions as described above instead of the controller 821. The BB processor 826 may be a module including a memory having a communication control program stored therein, a processor to execute the program, and a related circuit, and the function of the BB processor 826 may be changeable by updating the program. Further, the module may be a card or blade to be inserted into a slot of the base station apparatus 820, or a chip mounted on the card or the blade. Meanwhile, the RF circuit 827 may include a mixer, a filter, an amplifier, and the like, and transmits and receives a wireless signal via the antenna 810.

The wireless communication interface 825 may include a plurality of the BB processors 826 as illustrated in FIG. 30, and the plurality of BB processors 826 may, for example, correspond to a plurality of frequency bands used by the eNB 800. Further, the wireless communication interface 825 may also include a plurality of the RF circuits 827, as illustrated in FIG. 30, and the plurality of RF circuits 827 may, for example, correspond to a plurality of antenna elements. Note that FIG. 30 illustrates an example in which the wireless communication interface 825 includes the plurality of BB processors 826 and the plurality of RF circuits 827, but the wireless communication interface 825 may include the single BB processor 826 or the single RF circuit 827.

In the eNB 800 illustrated in FIG. 30, one or more components (the setting unit 151, the notification unit 153, and/or the transmission processing unit 155) included in the processing unit 150 described with reference to FIG. 11 may be implemented in the wireless communication interface 825. Alternatively, at least some of these structural elements may be implemented by the controller 821. As an example, a module which includes a part (for example, the BB processor 826) or all of the wireless communication interface 825 and/or the controller 821 may be mounted in the eNB 800, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the eNB 800, and the wireless communication interface 825 (for example, the BB processor 826) and/or the controller 821 may execute the program. As described above, the eNB 800, the base station apparatus 820, or the module may be provided as an apparatus which includes the one or more structural elements, and the program for causing the processor to function as the one or more structural elements may be provided. In addition, a readable recording medium in which the program is recorded may be provided.

In addition, in the eNB 800 illustrated in FIG. 30, the wireless communication unit 120 described with reference to FIG. 5 may be implemented by the wireless communication interface 825 (for example, the RF circuit 827). Moreover, the antenna unit 110 may be implemented by the antenna 810. In addition, the network communication unit 130 may be implemented by the controller 821 and/or the network interface 823. Further, the storage unit 140 may be implemented by the memory 822.

(Second application example)

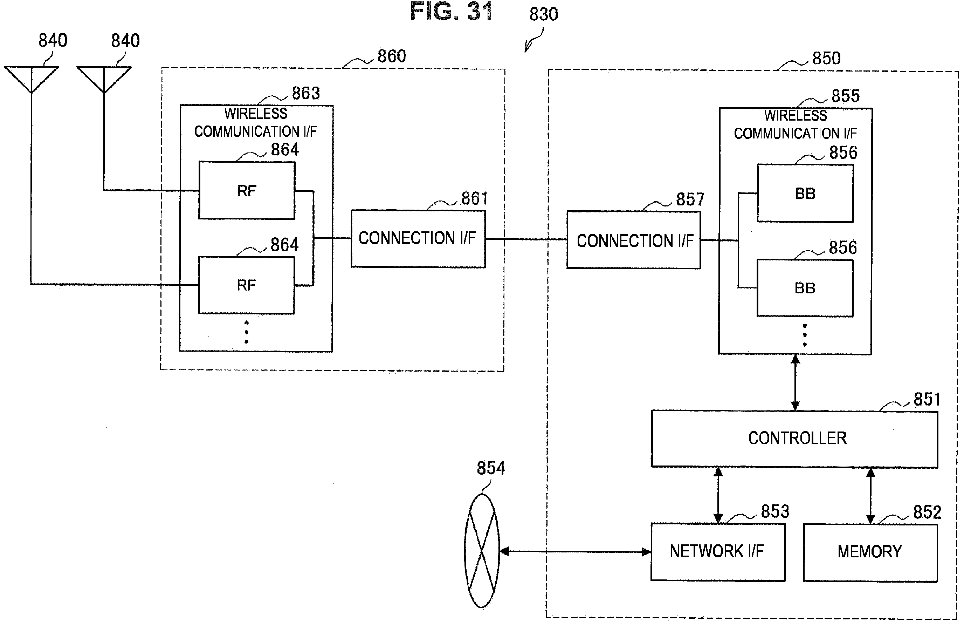

FIG. 31 is a block diagram illustrating a second example of a schematic configuration of an eNB to which the technology according to the present disclosure may be applied. An eNB 830 includes one or more antennas 840, a base station apparatus 850, and an RRH 860. Each of the antennas 840 and the RRH 860 may be connected to each other via an RF cable. Further, the base station apparatus 850 and the RRH 860 may be connected to each other by a high speed line such as optical fiber cables.

Each of the antennas 840 includes a single or a plurality of antenna elements (e.g., antenna elements constituting a MIMO antenna), and is used for the RRH 860 to transmit and receive a wireless signal. The eNB 830 may include a plurality of the antennas 840 as illustrated in FIG. 31, and the plurality of antennas 840 may, for example, correspond to a plurality of frequency bands used by the eNB 830. Note that FIG. 31 illustrates an example in which the eNB 830 includes the plurality of antennas 840, but the eNB 830 may include the single antenna 840.

The base station apparatus 850 includes a controller 851, a memory 852, a network interface 853, a wireless communication interface 855, and a connection interface 857. The controller 851, the memory 852, and the network interface 853 are similar to the controller 821, the memory 822, and the network interface 823 described with reference to FIG. 30.

The wireless communication interface 855 supports a cellular communication system such as LTE and LTE-Advanced, and provides wireless connection to a terminal located in a sector corresponding to the RRH 860 via the RRH 860 and the antenna 840. The wireless communication interface 855 may typically include a BB processor 856 or the like. The BB processor 856 is similar to the BB processor 826 described with reference to FIG. 30 except that the BB processor 856 is connected to an RF circuit 864 of the RRH 860 via the connection interface 857. The wireless communication interface 855 may include a plurality of the BB processors 856, as illustrated in FIG. 31, and the plurality of BB processors 856 may, for example, correspond to a plurality of frequency bands used by the eNB 830. Note that FIG. 31 illustrates an example in which the wireless communication interface 855 includes the plurality of BB processors 856, but the wireless communication interface 855 may include the single BB processor 856.

The connection interface 857 is an interface for connecting the base station apparatus 850 (wireless communication interface 855) to the RRH 860. The connection interface 857 may be a communication module for communication on the high speed line which connects the base station apparatus 850 (wireless communication interface 855) to the RRH 860.

Further, the RRH 860 includes a connection interface 861 and a wireless communication interface 863.

The connection interface 861 is an interface for connecting the RRH 860 (wireless communication interface 863) to the base station apparatus 850. The connection interface 861 may be a communication module for communication on the high speed line.

The wireless communication interface 863 transmits and receives a wireless signal via the antenna 840. The wireless communication interface 863 may typically include the RF circuit 864 or the like. The RF circuit 864 may include a mixer, a filter, an amplifier and the like, and transmits and receives a wireless signal via the antenna 840. The wireless communication interface 863 may include a plurality of the RF circuits 864 as illustrated in FIG. 31, and the plurality of RF circuits 864 may, for example, correspond to a plurality of antenna elements. Note that FIG. 31 illustrates an example in which the wireless communication interface 863 includes the plurality of RF circuits 864, but the wireless communication interface 863 may include the single RF circuit 864.

In the eNB 830 illustrated in FIG. 31, one or more components (the setting unit 151, the notification unit 153, and/or the transmission processing unit 155) included in the processing unit 150 described with reference to FIG. 11 may be implemented in the wireless communication interface 855 and/or the wireless communication interface 863. Alternatively, at least some of these structural elements may be implemented by the controller 851. As an example, a module which includes a part (for example, the BB processor 856) or all of the wireless communication interface 855 and/or the controller 851 may be mounted in the eNB 830, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the eNB 830, and the wireless communication interface 855 (for example, the BB processor 856) and/or the controller 851 may execute the program. As described above, the eNB 830, the base station apparatus 850, or the module may be provided as an apparatus which includes the one or more structural elements, and the program for causing the processor to function as the one or more structural elements may be provided. In addition, a readable recording medium in which the program is recorded may be provided.

In addition, in the eNB 830 illustrated in FIG. 31, for example, the wireless communication unit 120 described with reference to FIG. 5 may be implemented by the wireless communication interface 863 (for example, the RF circuit 864). Moreover, the antenna unit 110 may be implemented by the antenna 840. In addition, the network communication unit 130 may be implemented by the controller 851 and/or the network interface 853. Further, the storage unit 140 may be implemented by the memory 852.

<5.2. Application examples for terminal apparatus>

(First application example)

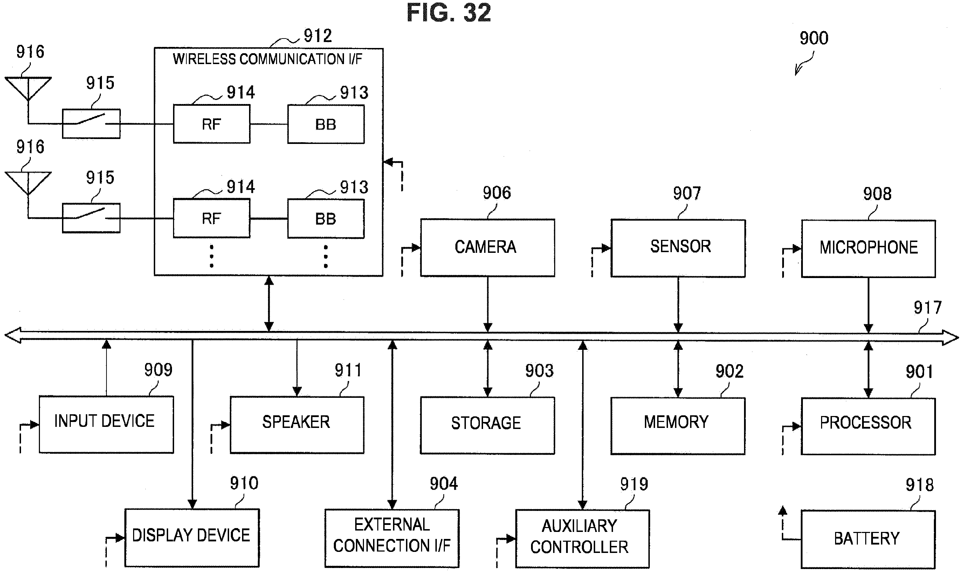

FIG. 32 is a block diagram illustrating an example of a schematic configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on chip (SoC), and controls the functions of an application layer and other layers of the smartphone 900. The memory 902 includes a RAM and a ROM, and stores a program executed by the processor 901 and data. The storage 903 may include a storage medium such as semiconductor memories and hard disks. The external connection interface 904 is an interface for connecting the smartphone 900 to an externally attached device such as memory cards and universal serial bus (USB) devices.

The camera 906 includes, for example, an image sensor such as charge coupled devices (CCDs) and complementary metal oxide semiconductor (CMOS), and generates a captured image. The sensor 907 may include a sensor group including, for example, a positioning sensor, a gyro sensor, a geomagnetic sensor, an acceleration sensor and the like. The microphone 908 converts a sound that is input into the smartphone 900 to an audio signal. The input device 909 includes, for example, a touch sensor which detects that a screen of the display device 910 is touched, a key pad, a keyboard, a button, a switch or the like, and accepts an operation or an information input from a user. The display device 910 includes a screen such as liquid crystal displays (LCDs) and organic light emitting diode (OLED) displays, and displays an output image of the smartphone 900. The speaker 911 converts the audio signal that is output from the smartphone 900 to a sound.

The wireless communication interface 912 supports a cellular communication system such as LTE or LTE-Advanced, and performs wireless communication. The wireless communication interface 912 may typically include the BB processor 913, the RF circuit 914, and the like. The BB processor 913 may, for example, perform encoding/decoding, modulation/demodulation, multiplexing/demultiplexing, and the like, and performs a variety of types of signal processing for wireless communication. On the other hand, the RF circuit 914 may include a mixer, a filter, an amplifier, and the like, and transmits and receives a wireless signal via the antenna 916. The wireless communication interface 912 may be a one-chip module in which the BB processor 913 and the RF circuit 914 are integrated. The wireless communication interface 912 may include a plurality of BB processors 913 and a plurality of RF circuits 914 as illustrated in FIG. 32. Note that FIG. 32 illustrates an example in which the wireless communication interface 912 includes a plurality of BB processors 913 and a plurality of RF circuits 914, but the wireless communication interface 912 may include a single BB processor 913 or a single RF circuit 914.

Further, the wireless communication interface 912 may support other types of wireless communication system such as a short range wireless communication system, a near field communication system, and a wireless local area network (LAN) system in addition to the cellular communication system, and in this case, the wireless communication interface 912 may include the BB processor 913 and the RF circuit 914 for each wireless communication system.

Each antenna switch 915 switches a connection destination of the antenna 916 among a plurality of circuits (for example, circuits for different wireless communication systems) included in the wireless communication interface 912.

Each of the antennas 916 includes one or more antenna elements (for example, a plurality of antenna elements constituting a MIMO antenna) and is used for transmission and reception of the wireless signal by the wireless communication interface 912. The smartphone 900 may include a plurality of antennas 916 as illustrated in FIG. 32. Note that FIG. 32 illustrates an example in which the smartphone 900 includes a plurality of antennas 916, but the smartphone 900 may include a single antenna 916.

Further, the smartphone 900 may include the antenna 916 for each wireless communication system. In this case, the antenna switch 915 may be omitted from a configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies electric power to each block of the smartphone 900 illustrated in FIG. 32 via a feeder line that is partially illustrated in the figure as a dashed line. The auxiliary controller 919, for example, operates a minimally necessary function of the smartphone 900 in a sleep mode.

In the smartphone 900 illustrated in FIG. 32, one or more structural elements included in the processing unit 240 (the acquisition unit 241 and/or the reception processing unit 243) described with reference to FIG. 12 may be implemented by the wireless communication interface 912. Alternatively, at least some of these structural elements may be implemented by the processor 901 or the auxiliary controller 919. As an example, a module which includes a part (for example, the BB processor 913) or all of the wireless communication interface 912, the processor 901, and/or the auxiliary controller 919 may be mounted in the smartphone 900, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the smartphone 900, and the wireless communication interface 912 (for example, the BB processor 913), the processor 901, and/or the auxiliary controller 919 may execute the program. As described above, the smartphone 900 or the module may be provided as an apparatus which includes the one or more structural elements, and the program for causing the processor to function as the one or more structural elements may be provided. In addition, a readable recording medium in which the program is recorded may be provided.

In addition, in the smartphone 900 illustrated in FIG. 32, for example, the wireless communication unit 220 described with reference to FIG. 12 may be implemented by the wireless communication interface 912 (for example, the RF circuit 914). Moreover, the antenna unit 210 may be implemented by the antenna 916. Further, the storage unit 230 may be implemented by the memory 902.

(Second application example)

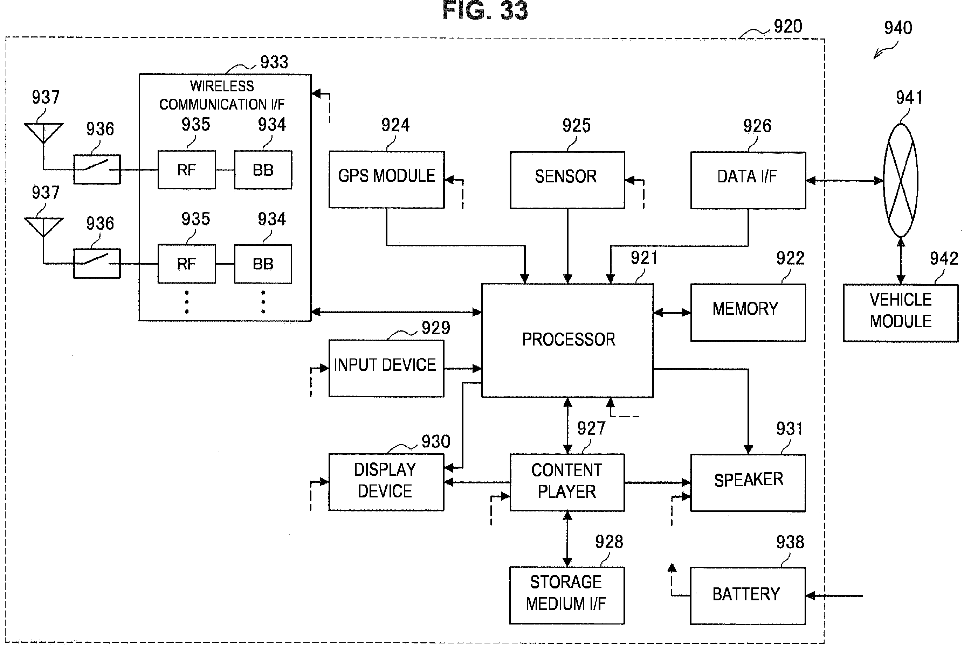

FIG. 33 is a block diagram illustrating an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls the navigation function and the other functions of the car navigation apparatus 920. The memory 922 includes a RAM and a ROM, and stores a program executed by the processor 921 and data.

The GPS module 924 uses a GPS signal received from a GPS satellite to measure the position (e.g., latitude, longitude, and altitude) of the car navigation apparatus 920. The sensor 925 may include a sensor group including, for example, a gyro sensor, a geomagnetic sensor, a barometric sensor and the like. The data interface 926 is, for example, connected to an in-vehicle network 941 via a terminal that is not illustrated, and acquires data such as vehicle speed data generated on the vehicle side.

The content player 927 reproduces content stored in a storage medium (e.g., CD or DVD) inserted into the storage medium interface 928. The input device 929 includes, for example, a touch sensor which detects that a screen of the display device 930 is touched, a button, a switch or the like, and accepts operation or information input from a user. The display device 930 includes a screen such as LCDs and OLED displays, and displays an image of the navigation function or the reproduced content. The speaker 931 outputs a sound of the navigation function or the reproduced content.

The wireless communication interface 933 supports a cellular communication system such as LTE or LTE-Advanced, and performs wireless communication. The wireless communication interface 933 may typically include the BB processor 934, the RF circuit 935, and the like. The BB processor 934 may, for example, perform encoding/decoding, modulation/demodulation, multiplexing/demultiplexing, and the like, and performs a variety of types of signal processing for wireless communication. On the other hand, the RF circuit 935 may include a mixer, a filter, an amplifier, and the like, and transmits and receives a wireless signal via the antenna 937. The wireless communication interface 933 may be a one-chip module in which the BB processor 934 and the RF circuit 935 are integrated. The wireless communication interface 933 may include a plurality of BB processors 934 and a plurality of RF circuits 935 as illustrated in FIG. 33. Note that FIG. 33 illustrates an example in which the wireless communication interface 933 includes a plurality of BB processors 934 and a plurality of RF circuits 935, but the wireless communication interface 933 may include a single BB processor 934 or a single RF circuit 935.

Further, the wireless communication interface 933 may support other types of wireless communication system such as a short range wireless communication system, a near field communication system, and a wireless LAN system in addition to the cellular communication system, and in this case, the wireless communication interface 933 may include the BB processor 934 and the RF circuit 935 for each wireless communication system.

Each antenna switch 936 switches a connection destination of the antenna 937 among a plurality of circuits (for example, circuits for different wireless communication systems) included in the wireless communication interface 933.

Each of the antennas 937 includes one or more antenna elements (for example, a plurality of antenna elements constituting a MIMO antenna) and is used for transmission and reception of the wireless signal by the wireless communication interface 933. The car navigation apparatus 920 may include a plurality of antennas 937 as illustrated in FIG. 33. Note that FIG. 33 illustrates an example in which the car navigation apparatus 920 includes a plurality of antennas 937, but the car navigation apparatus 920 may include a single antenna 937.

Further, the car navigation apparatus 920 may include the antenna 937 for each wireless communication system. In this case, the antenna switch 936 may be omitted from a configuration of the car navigation apparatus 920.

The battery 938 supplies electric power to each block of the car navigation apparatus 920 illustrated in FIG. 33 via a feeder line that is partially illustrated in the figure as a dashed line. Further, the battery 938 accumulates the electric power supplied from the vehicle.

In the car navigation apparatus 920 illustrated in FIG. 33, one or more structural elements included in the processing unit 240 (the acquisition unit 241 and/or the reception processing unit 243) described with reference to FIG. 12 may be implemented by the wireless communication interface 933. Alternatively, at least some of these structural elements may be implemented by the processor 921. As an example, a module which includes a part (for example, the BB processor 934) or all of the wireless communication interface 933 and/or the processor 921 may be mounted in the car navigation apparatus 920, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the car navigation apparatus 920, and the wireless communication interface 933 (for example, the BB processor 934) and/or the processor 921 may execute the program. As described above, the car navigation apparatus 920 or the module may be provided as an apparatus which includes the one or more structural elements, and the program for causing the processor to function as the one or more structural elements may be provided. In addition, a readable recording medium in which the program is recorded may be provided.

In addition, in the car navigation apparatus 920 illustrated in FIG. 33, for example, the wireless communication unit 220 described with reference to FIG. 12 may be implemented by the wireless communication interface 933 (for example, the RF circuit 935). Moreover, the antenna unit 210 may be implemented by the antenna 937. Further, the storage unit 230 may be implemented by the memory 922.

The technology of the present disclosure may also be realized as an in-vehicle system (or a vehicle) 940 including one or more blocks of the car navigation apparatus 920, the in-vehicle network 941, and a vehicle module 942. That is, the in-vehicle system (or a vehicle) 940 may be provided as an apparatus including the acquisition unit 241 and the reception processing unit 243. The vehicle module 942 generates vehicle data such as vehicle speed, engine speed, and trouble information, and outputs the generated data to the in-vehicle network 941.

<<6. Conclusion>>

An embodiment of the present disclosure has been described above in detail with reference to FIGS. 1 to 33. As described above, the base stations 100 variably sets at least any of bandwidth of a subcarrier or time length of a subsymbol included in a unit resource including one or more subcarriers or one or more subsymbols, and sets, as a used subcarrier, at least a part of a frequency band corresponding to an unused subcarrier of a first resource in a second resource including the unit resource in which the bandwidth of the subcarrier is less than in the first resource. This allows at least a part of the unused subcarriers in the first resource to be used as used subcarriers in the second resource, and allows the frequency use efficiency to be improved.

In addition, carriers of the first resource and the second resource may have the same center frequency. This allows a local signal leakage component produced when the first resource is generated to be included in a DC subcarrier of the second resource. Then, the subcarrier including a local signal leakage component is not still used, so that it is possible to retain the reception success probability.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above-described embodiment, the example has been described in which the two resources including the first resource and the second resource are multiplexed. However, the present technology is not limited to such an example. For example, three or more resources may be multiplexed.

In addition, in the above embodiment, it has been described that the base station 100 is the transmission apparatus, and the terminal apparatus 200 is the reception apparatus has been described, but the present technology is not limited to this example. For example, the terminal apparatus 200 may be the transmission apparatus, and the base station 100 may be the reception apparatus. In addition, the present technology is not limited to communication between the base station and the terminal, but the present technology is also applicable, for example, to device-to-device (D2D) communication, vehicle-to-X (V2X) communication, and the like.

Further, the processes described using the flowcharts in this specification need not be necessarily executed in the described order. Several process steps may be executed in parallel. Further, an additional process step may be employed, and some process steps may be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Reference Signs List

| 1 | system |
|---|---|
| 100 | base station |
| 110 | antenna unit |
| 120 | wireless communication unit |
| 130 | network communication unit |
| 140 | storage unit |
| 150 | processing unit |
| 151 | setting unit |
| 153 | notification unit |
| 155 | transmission processing unit |
| 200 | terminal apparatus |
| 210 | antenna unit |
| 220 | wireless communication unit |
| 230 | storage unit |
| 240 | processing unit |
| 241 | acquisition unit |
| 243 | reception processing unit |

**Claims**

1. An apparatus (100) comprising:

    a processing unit (150) configured to

        - perform generalized frequency division multiplexing, GFDM, modulation of input data, wherein a symbol is divided into a number of subsymbols,
        - variably set at least any of bandwidth of a subcarrier or time length of a subsymbol included in a unit resource including one or more subcarriers or one or more subsymbols, and
- set at least a part of a frequency band corresponding to an unused subcarrier of a first resource that is provided for use by a first destination as a used subcarrier in a second resource that is provided for use by a second destination, the second resource including the unit resource in which the bandwidth of the subcarrier is less than in the first resource,

wherein the first destination is the same as or different than the second destination, and
wherein the unused subcarrier of the first resource includes a DC subcarrier of the first resource and/or a subcarrier around a DC subcarrier of the first resource and/or a guard band.

2. The apparatus according to claim 1, wherein
carriers of the first resource and the second resource have same center frequency.

3. The apparatus according to any preceding claim, wherein
the bandwidth of the subcarrier of the unit resource included in the first resource is an integer multiple of the bandwidth of the subcarrier of the unit resource included in the second resource.

4. The apparatus according to claim 3, wherein
a product of the number of subcarriers and the number of subsymbols is same between the unit resource included in the first resource and the unit resource included in the second resource.

5. The apparatus according to claim 4, wherein
the number of subcarriers of the unit resource included in the second resource is an integer multiple of the number of subcarriers of the unit resource included in the first resource.

6. The apparatus according to claim 3, wherein
a product of the number of subcarriers and the number of subsymbols is different between the unit resource included in the first resource and the unit resource included in the second resource.

7. The apparatus according to any preceding claim, wherein
the number of subcarriers of the unit resource included in the second resource is an odd number.

8. The apparatus according to any preceding claim, wherein
the processing unit (150) is configured to set, as an unused subcarrier, a frequency band corresponding to a used subcarrier of the first resource in the second resource.

9. The apparatus according to any preceding claim, wherein
the processing unit (150) is configured to store zero in unused subcarriers of the first resource and the second resource.

10. The apparatus according to any preceding claim, wherein
the processing unit (150) is configured to notify another apparatus of information indicating setting of the first resource and the second resource, in particular to change setting of the unit resource included in the second resource along with a change in setting of the unit resource included in the first resource.

11. The apparatus according to any preceding claim, wherein
the processing unit (150) is configured to perform filtering on the first resource and the second resource for each subcarrier.

12. An apparatus (200) comprising:

a processing unit (240) configured to perform generalized frequency division multiplexing, GFDM, demodulation of a first resource that is provided for use by a first destination as a used subcarrier and a second resource that is provided for use by a second destination, in which at least any of bandwidth of a subcarrier or time length of a subsymbol included in a unit resource including one or more subcarriers or one or more subsymbols is variably set
wherein a symbol is divided into a number of subsymbols,
wherein the first destination is the same as or different than the second destination,

wherein the bandwidth of the subcarrier is less in the second resource than in the first resource,
wherein at least a part of a frequency band corresponding to an unused subcarrier of the first resource is set as a used subcarrier in the second resource, and
wherein the unused subcarrier of the first resource includes a DC subcarrier of the first resource and/or a subcarrier around a DC subcarrier of the first resource and/or a guard band.

**13.** A method comprising:

performing generalized frequency division multiplexing, GFDM, of input data, wherein a symbol is divided into a number of subsymbols,
variably setting at least any of bandwidth of a subcarrier or time length of a subsymbol included in a unit resource including one or more subcarriers or one or more subsymbols, and
setting at least a part of a frequency band corresponding to an unused subcarrier of a first resource that is provided for use by a first destination as a used subcarrier in a second resource that is provided for use by a second destination, the second resource including the unit resource in which the bandwidth of the subcarrier is less than in the first resource,
wherein the first destination is the same as or different than the second destination, and
wherein the unused subcarrier of the first resource includes a DC subcarrier of the first resource and/or a subcarrier around a DC subcarrier of the first resource and/or a guard band.

**14.** A method comprising:

perform generalized frequency division multiplexing, GFDM, demodulation of a first resource that is provided for use by a first destination as a used subcarrier and a second resource that is provided for use by a second destination, in which at least any of bandwidth of a subcarrier or time length of a subsymbol included in a unit resource including one or more subcarriers or one or more subsymbols is variably set
wherein a symbol is divided into a number of subsymbols,
wherein the first destination is the same as or different than the second destination,
wherein the bandwidth of the subcarrier is less in the second resource than in the first resource,
wherein at least a part of a frequency band corresponding to an unused subcarrier of the first resource is set as a used subcarrier in the second resource, and
wherein the unused subcarrier of the first resource includes a DC subcarrier of the first resource and/or a subcarrier around a DC subcarrier of the first resource and/or a guard band.

**Patentansprüche**

**1.** Vorrichtung (100), umfassend:

eine Verarbeitungseinheit (150), die ausgelegt ist zum

- Durchführen einer GFDM(Generalized Frequency Division Multiplexing)-Modulation von Eingangsdaten, wobei ein Symbol in eine Anzahl von Untersymbolen unterteilt ist,
- variables Setzen mindestens einer beliebigen einer Bandbreite eines Unterträgers oder einer Zeitlänge eines Teilsymbols enthalten in einer Einheitsressource einschließlich einem oder mehreren Unterträgern von einem oder mehreren Untersymbolen, und
- Setzen mindestens eines Teils eines Frequenzbands entsprechend einem unbenutzten Unterträger einer ersten Ressource, die zur Verwendung durch eine erste Destination als ein benutzter Unterträger in einer zweiten Ressource vorgesehen ist, die zur Verwendung durch eine zweite Destination vorgesehen ist, wobei die zweite Ressource die Einheitsressource enthält, in der die Bandbreite des Unterträgers kleiner ist als in der ersten Ressource,

wobei die erste Destination gleich oder verschieden ist von der zweiten Destination, und
wobei der ungenutzte Unterträger der ersten Ressource einen DC-Unterträger der ersten Ressource und/oder einen Unterträger um einen DC-Unterträger der ersten Ressource und/oder eines Schutzbands enthält.

**2.** Vorrichtung nach Anspruch 1, wobei
Träger der ersten Ressource und der zweiten Ressource die gleiche Mittenfrequenz aufweisen.

**3.** Vorrichtung nach einem vorhergehenden Anspruch, wobei
die Bandbreite des Unterträgers der in der ersten Ressource enthaltenen Einheitsressource ein ganzzahliges Vielfaches der Bandbreite des Unterträgers der in der zweiten Ressource enthaltenen Einheitsressource ist.

**4.** Vorrichtung nach Anspruch 3, wobei
ein Produkt aus der Anzahl von Unterträgern und der Anzahl von Untersymbolen zwischen der in der ersten Ressource enthaltenen Einheitsressource und der in der zweiten Ressource enthaltenen Einheitsressource gleich ist.

**5.** Vorrichtung nach Anspruch 4, wobei
die Anzahl von Unterträgern der in der zweiten Ressource enthaltenen Einheitsressource ein ganzzahliges Vielfaches der Anzahl von Unterträgern der in der ersten Ressource enthaltenen Einheitsressource ist.

**6.** Vorrichtung nach Anspruch 3, wobei
ein Produkt aus der Anzahl von Unterträgern und der Anzahl von Untersymbolen zwischen der in der ersten Ressource enthaltenen Einheitsressource und der in der zweiten Ressource enthaltenen Einheitsressource verschieden ist.

**7.** Vorrichtung nach einem vorhergehenden Anspruch, wobei
die Anzahl an Unterträgern der in der zweiten Ressource enthaltenen Einheitsressource eine ungerade Zahl ist.

**8.** Vorrichtung nach einem vorhergehenden Anspruch, wobei
die Verarbeitungseinheit (150) ausgelegt ist zum Setzen, als einen ungenutzten Unterträger, eines Frequenzbands entsprechend einem benutzten Unterträger der ersten Ressource in der zweiten Ressource.

**9.** Vorrichtung nach einem vorhergehenden Anspruch, wobei
die Verarbeitungseinheit (150) konfiguriert ist zum Speichern einer Null in ungenutzten Unterträgern der ersten Ressource und der zweiten Ressource.

**10.** Vorrichtung nach einem vorhergehenden Anspruch, wobei
die Verarbeitungseinheit (150) ausgelegt ist zum Benachrichtigen einer anderen Vorrichtung über Informationen, die die Einstellung der ersten Ressource und der zweiten Ressource anzeigen, insbesondere zum Ändern einer Einstellung der in der zweiten Ressource enthaltenen Einheitsressource zusammen mit einer Änderung bei der Einstellung der in der ersten Ressource enthaltenen Einheitsressource.

**11.** Vorrichtung nach einem vorhergehenden Anspruch, wobei
die Verarbeitungseinheit (150) ausgelegt ist zum Durchführen von Filterung an der ersten Ressource und an der zweiten Ressource für jeden Subträger.

**12.** Vorrichtung (200), umfassend:

eine Verarbeitungseinheit (240), die ausgelegt ist zum Durchführen einer GFDM(Generalized Frequency Division Multiplexing)-Demodulation einer ersten Ressource, die zur Verwendung durch eine erste Destination als ein benutzter Unterträger vorgesehen ist, und einer zweiten Ressource, die zur Verwendung durch eine zweite Destination vorgesehen ist, wobei mindestens eine beliebige einer Bandbreite eines Unterträgers oder einer Zeitlänge eines Untersymbols enthalten in einer Einheitsressource einschließlich einem oder mehreren Unterträgern oder einem oder mehreren Untersymbolen variabel gesetzt ist,
wobei ein Symbol in eine Anzahl von Untersymbolen unterteilt ist,
wobei die erste Destination gleich oder verschieden ist von der zweiten Destination,
wobei die Bandbreite des Unterträgers weniger in der zweiten Ressource als in der ersten Ressource ist,
wobei mindestens ein Teil eines Frequenzbands entsprechend einem ungenutzten Unterträger der ersten Ressource als ein benutzter Unterträger in der zweiten Ressource eingestellt ist, und
wobei der ungenutzte Unterträger der ersten Ressource einen DC-Unterträger der ersten Ressource und/oder einen Unterträger um einen DC-Unterträger der ersten Ressource und/oder eines Schutzbands enthält.

**13.** Verfahren, umfassend:

Durchführen einer GFDM(Generalized Frequency Division Multiplexing)-Modulation von Eingangsdaten, wobei ein Symbol in eine Anzahl von Untersymbolen unterteilt ist,

variables Setzen mindestens einer beliebigen einer Bandbreite eines Unterträgers oder einer Zeitlänge eines Teilsymbols enthalten in einer Einheitsressource einschließlich einem oder mehreren Unterträgern von einem oder mehreren Untersymbolen, und

Setzen mindestens eines Teils eines Frequenzbands entsprechend einem unbenutzten Unterträger einer ersten Ressource, die zur Verwendung durch eine erste Destination als ein benutzter Unterträger in einer zweiten Ressource vorgesehen ist, die zur Verwendung durch eine zweite Destination vorgesehen ist, wobei die zweite Ressource die Einheitsressource enthält, in der die Bandbreite des Unterträgers kleiner ist als in der ersten Ressource,

wobei die erste Destination gleich oder verschieden ist von der zweiten Destination, und

wobei der ungenutzte Unterträger der ersten Ressource einen DC-Unterträger der ersten Ressource und/oder einen Unterträger um einen DC-Unterträger der ersten Ressource und/oder eines Schutzbands enthält.

**14.** Verfahren, umfassend:

Durchführen einer GFDM(Generalized Frequency Division Multiplexing)-Demodulation einer ersten Ressource, die zur Verwendung durch eine erste Destination als ein benutzter Unterträger vorgesehen ist, und einer zweiten Ressource, die zur Verwendung durch eine zweite Destination vorgesehen ist, wobei mindestens eine beliebige einer Bandbreite eines Unterträgers oder einer Zeitlänge eines Untersymbols enthalten in einer Einheitsressource einschließlich einem oder mehreren Unterträgern oder einem oder mehreren Untersymbolen variabel gesetzt ist,

wobei ein Symbol in eine Anzahl von Untersymbolen unterteilt ist,

wobei die erste Destination gleich oder verschieden ist von der zweiten Destination,

wobei die Bandbreite des Unterträgers weniger in der zweiten Ressource als in der ersten Ressource ist,

wobei mindestens ein Teil eines Frequenzbands entsprechend einem ungenutzten Unterträger der ersten Ressource als ein benutzter Unterträger in der zweiten Ressource eingestellt ist, und

wobei der ungenutzte Unterträger der ersten Ressource einen DC-Unterträger der ersten Ressource und/oder einen Unterträger um einen DC-Unterträger der ersten Ressource und/oder eines Schutzbands enthält.

## Revendications

**1.** Appareil (100) comprenant :

une unité de traitement (150) configurée pour

- effectuer une modulation de multiplexage par répartition généralisée de la fréquence, GFDM, de données d'entrée, dans laquelle un symbole est divisé en un certain nombre de sous-symboles,
- régler de manière variable au moins un élément quelconque parmi une largeur de bande d'une sous-porteuse ou une longueur de temps d'un sous-symbole contenu dans une ressource unitaire contenant une ou plusieurs sous-porteuses ou un ou plusieurs sous-symboles, et
- régler au moins une partie d'une bande de fréquences correspondant à une sous-porteuse inutilisée d'une première ressource qui est fournie pour une utilisation par une première destination comme sous-porteuse utilisée dans une deuxième ressource qui est fournie pour une utilisation par une deuxième destination, la deuxième ressource contenant la ressource unitaire dans laquelle la largeur de bande de la sous-porteuse est inférieure à ce qu'elle est dans la première ressource,

dans lequel la première destination est identique à, ou différente de la deuxième destination, et

dans lequel la sous-porteuse inutilisée de la première ressource contient une sous-porteuse CC de la première ressource et/ou une sous-porteuse située autour d'une sous-porteuse CC de la première ressource et/ou une bande de garde.

**2.** Appareil selon la revendication 1, dans lequel
les porteuses de la première ressource et de la deuxième ressource ont la même fréquence centrale.

**3.** Appareil selon n'importe quelle revendication précédente, dans lequel
la largeur de bande de la sous-porteuse de la ressource unitaire contenue dans la première ressource est un multiple entier de la largeur de bande de la sous-porteuse de la ressource unitaire contenue dans la deuxième ressource.

**4.** Appareil selon la revendication 3, dans lequel
un produit du nombre de sous-porteuses et du nombre de sous-symboles est le même dans la ressource unitaire contenue dans la première ressource et dans la ressource unitaire contenue dans la deuxième ressource.

**5.** Appareil selon la revendication 4, dans lequel
le nombre de sous-porteuses de la ressource unitaire contenue dans la deuxième ressource est un multiple entier du nombre de sous-porteuses de la ressource unitaire contenue dans la première ressource.

**6.** Appareil selon la revendication 3, dans lequel
un produit du nombre de sous-porteuses et du nombre de sous-symboles est différent dans la ressource unitaire contenue dans la première ressource et dans la ressource unitaire contenue dans la deuxième ressource.

**7.** Appareil selon n'importe quelle revendication précédente, dans lequel
le nombre de sous-porteuses de la ressource unitaire contenue dans la deuxième ressource est un nombre impair.

**8.** Appareil selon n'importe quelle revendication précédente, dans lequel
l'unité de traitement (150) est configurée pour régler, en tant que sous-porteuse inutilisée, une bande de fréquences correspondant à une sous-porteuse utilisée de la première ressource dans la deuxième ressource.

**9.** Appareil selon n'importe quelle revendication précédente, dans lequel
l'unité de traitement (150) est configurée pour stocker zéro dans les sous-porteuses inutilisées de la première ressource et de la deuxième ressource.

**10.** Appareil selon n'importe quelle revendication précédente, dans lequel
l'unité de traitement (150) est configurée pour communiquer à un autre appareil l'information indiquant le réglage de la première ressource et de la deuxième ressource, en particulier pour modifier le réglage de la première ressource contenue dans la deuxième ressource en même temps que se produit une modification du réglage de la ressource unitaire contenue dans la première ressource.

**11.** Appareil selon n'importe quelle revendication précédente, dans lequel
l'unité de traitement (150) est configurée pour effectuer un filtrage sur la première ressource et la deuxième ressource pour chaque sous-porteuse.

**12.** Appareil (200) comprenant :

une unité de traitement (240) configurée pour effectuer une démodulation de multiplexage par répartition généralisée de la fréquence, GFDM, d'une première ressource qui est fournie pour une utilisation par une première destination en tant que sous-porteuse utilisée et une deuxième ressource qui est fournie pour une utilisation par une deuxième destination, dans laquelle au moins un élément quelconque parmi une largeur de bande d'une sous-porteuse ou une longueur de temps d'un sous-symbole contenu dans une ressource unitaire contenant une ou plusieurs sous-porteuses ou un ou plusieurs sous-symboles est réglé de manière variable,
dans lequel un symbole est divisé en un certain nombre de sous-symboles,
dans lequel la première destination est identique à, ou différente de la deuxième destination,
dans lequel la largeur de bande de la sous-porteuse est inférieure dans la deuxième ressource à ce qu'elle est dans la première ressource,
dans lequel au moins une partie d'une bande de fréquences correspondant à une sous-porteuse inutilisée de la première ressource est réglée comme sous-porteuse utilisée dans la deuxième ressource, et
dans lequel la sous-porteuse inutilisée de la première ressource contient une sous-porteuse CC de la première ressource et/ou une sous-porteuse située autour d'une sous-porteuse CC de la première ressource et/ou une bande de garde.

**13.** Procédé comprenant les étapes consistant à :

effectuer un multiplexage par répartition généralisée de la fréquence, GFDM, de données d'entrée, dans laquelle un symbole est divisé en un certain nombre de sous-symboles,
régler de manière variable au moins un élément quelconque parmi une largeur de bande d'une sous-porteuse ou une longueur de temps d'un sous-symbole contenu dans une ressource unitaire contenant une ou plusieurs sous-porteuses ou un ou plusieurs sous-symboles, et

26

régler au moins une partie d'une bande de fréquences correspondant à une sous-porteuse inutilisée d'une première ressource qui est fournie pour une utilisation par une première destination comme sous-porteuse utilisée dans une deuxième ressource qui est fournie pour une utilisation par une deuxième destination, la deuxième ressource contenant la ressource unitaire dans laquelle la largeur de bande de la sous-porteuse est inférieure à ce qu'elle est dans la première ressource,

dans lequel la première destination est identique à, ou différente de la deuxième destination, et

dans lequel la sous-porteuse inutilisée de la première ressource contient une sous-porteuse CC de la première ressource et/ou une sous-porteuse située autour d'une sous-porteuse CC de la première ressource et/ou une bande de garde.

**14.** Procédé comprenant les étapes consistant à :

effectuer une démodulation de multiplexage par répartition généralisée de la fréquence, GFDM, d'une première ressource qui est fournie pour une utilisation par une première destination en tant que sous-porteuse utilisée et une deuxième ressource qui est fournie pour une utilisation par une deuxième destination, dans laquelle au moins un élément quelconque parmi une largeur de bande d'une sous-porteuse ou une longueur de temps d'un sous-symbole contenu dans une ressource unitaire contenant une ou plusieurs sous-porteuses ou un ou plusieurs sous-symboles est réglé de manière variable,

dans lequel un symbole est divisé en un certain nombre de sous-symboles,

dans lequel la première destination est identique à, ou différente de la deuxième destination,

dans lequel la largeur de bande de la sous-porteuse est inférieure dans la deuxième ressource à ce qu'elle est dans la première ressource,

dans lequel au moins une partie d'une bande de fréquences correspondant à une sous-porteuse inutilisée de la première ressource est réglée comme sous-porteuse utilisée dans la deuxième ressource, et

dans lequel la sous-porteuse inutilisée de la première ressource contient une sous-porteuse CC de la première ressource et/ou une sous-porteuse située autour d'une sous-porteuse CC de la première ressource et/ou une bande de garde.

# FIG. 1

10　11　12

FREQUENCY

TIME

# FIG. 2

EP 3 422 650 B1

# FIG. 3

AMPLITUDE

COLUMN INDEX

ROW INDEX

# FIG. 4

$\cos(2\pi f_0 t)$

BASEBAND OFDM SIGNAL → Split

Re

Im

Anlog Filter

$-\sin(2\pi f_0 t)$

# FIG. 5

# FIG. 6

# FIG. 7

# FIG. 8

# FIG. 9

20A    20B

23    22    23

FREQUENCY

BANDWIDTH

# FIG. 10

<u>1</u>

200B

101

200D

100

200A

200C

EP 3 422 650 B1

# FIG. 11

# FIG. 12

# FIG. 13

# FIG. 14

61

3 SUBCARRIERS

3 SUBSYMBOLS

62

9 SUBCARRIERS

1 SUBSYMBOL

63

USED SUBCARRIER OF THE FIRST RESOURCE

USED SUBCARRIER OF THE SECOND RESOURCE

UNUSED SUBCARRIER

# FIG. 15

**FIG. 16**

160

EP 3 422 650 B1

# FIG. 17

EP 3 422 650 B1

FIG. 18

# FIG. 19

| 50 | 52B | 53B | 51 | 53A | 52A |
|----|------|------|-----|------|------|
| DC | Data | Null | GB | Null | Data |

# FIG. 20

# FIG. 21

# FIG. 22

THE SPECTRUM OF THE FIRST RESOURCE

THE SPECTRUM OF THE SECOND RESOURCE

# FIG. 23

EP 3 422 650 B1

**FIG. 24**

EP 3 422 650 B1

# FIG. 25

Input data → **FEC** → **Rate Matching** → **Scrambling** → **Inter-leaving** → **Constellation mapping** →

$d[n]$ → **Data mapping** → **Pulse shaping** → **Time Domain Symbol Generation** → GFDM Codeword $X[n]$

**FIG. 26**

EP 3 422 650 B1

FIG. 27

EP 3 422 650 B1

# FIG. 28

```
          ┌─────────┐
          │  START  │
          └─────────┘
               │
               ▼
┌──────────────────────────────────────────┐
│ PERFORM RESOURCE SETTING FOR FIRST RESOURCE │──S102
└──────────────────────────────────────────┘
               │
               ▼
┌──────────────────────────────────────────┐
│   PERFORM RESOURCE SETTING OF SECOND       │
│ RESOURCE SUCH THAT BANDWIDTH OF SUBCARRIER │──S104
│   IS LESS THAN THAT OF FIRST RESOURCE      │
└──────────────────────────────────────────┘
               │
               ▼
┌──────────────────────────────────────────┐
│   SET AT LEAST PART OF FREQUENCY BAND      │
│ CORRESPONDING TO UNUSED SUBCARRIER IN FIRST│
│   RESOURCE AS USED SUBCARRIER OF SECOND    │──S106
│              RESOURCE                      │
└──────────────────────────────────────────┘
               │
               ▼
┌──────────────────────────────────────────┐
│    ISSUE NOTIFICATION OF SETTING INFORMATION │──S108
└──────────────────────────────────────────┘
               │
               ▼
┌──────────────────────────────────────────┐
│   STORE DATA IN USED SUBCARRIERS OF FIRST  │
│       RESOURCE AND SECOND RESOURCE         │──S110
└──────────────────────────────────────────┘
               │
               ▼
┌──────────────────────────────────────────┐
│       TRANSMISSION SIGNAL PROCESSING       │──S112
└──────────────────────────────────────────┘
               │
               ▼
┌──────────────────────────────────────────┐
│             TRANSMIT SIGNAL                │──S114
└──────────────────────────────────────────┘
               │
               ▼
          ┌─────────┐
          │   END   │
          └─────────┘
```

# FIG. 29

```
              ┌─────────────┐
              │    START    │
              └─────────────┘
                     │
                     ▼
    ┌──────────────────────────────────┐
    │   ACQUIRE SETTING INFORMATION     │───── S202
    └──────────────────────────────────┘
                     │
                     ▼
    ┌──────────────────────────────────┐
    │   RECEPTION SIGNAL PROCESSING     │───── S204
    └──────────────────────────────────┘
                     │
                     ▼
    ┌──────────────────────────────────┐
    │   ACQUIRE DATA STORED IN FIRST    │───── S206
    │ RESOURCE AND/OR SECOND RESOURCE   │
    └──────────────────────────────────┘
                     │
                     ▼
              ┌─────────────┐
              │     END     │
              └─────────────┘
```

# FIG. 30

800

810    810

820

825

WIRELESS COMMUNICATION I/F

827                    826

RF          BB

827                    826

RF          BB

821

CONTROLLER

824

823                    822

NETWORK I/F          MEMORY

## FIG. 31

# FIG. 32

EP 3 422 650 B1

# FIG. 33

EP 3 422 650 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100189132 A1

### Non-patent literature cited in the description

- **N. MICHAILOW et al.** Generalized Frequency Division Multiplexing for 5th Generation Cellular Networks. *IEEE Trans. Commun.,* September 2014, vol. 62 (9

- NB-IoT - Base station complexity. **ERICSSON.** 3GPP DRAFT; R1-157395 NB-IOT - BASESTATION COMPLEXIY, 3RD GENERATION PARTNERSHIP PROJECT (3GPP). MOBILE COMPETENCE CENTRE, 15 November 2015